(19)

**Europäisches Patentamt**
**European Patent Office**
**Office européen des brevets**

(11) **EP 4 510 051 A1**

(12) **EUROPEAN PATENT APPLICATION**
published in accordance with Art. 153(4) EPC

(43) Date of publication:
**19.02.2025 Bulletin 2025/08**

(21) Application number: **22937513.4**

(22) Date of filing: **26.09.2022**

(51) International Patent Classification (IPC):
**G06Q 10/00** (2023.01)

(52) Cooperative Patent Classification (CPC):
**G06Q 10/00; G06Q 10/20**

(86) International application number:
**PCT/JP2022/035746**

(87) International publication number:
**WO 2023/199538 (19.10.2023 Gazette 2023/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.04.2022 JP 2022066767**

(71) Applicant: **Hitachi, Ltd.**
**Tokyo 100-8280 (JP)**

(72) Inventors:
• **HIRANO, Kiichi**
**Tokyo 100-8280 (JP)**
• **YANO, Kojin**
**Tokyo 100-8280 (JP)**
• **OKUDA, Tatsuo**
**Tokyo 100-8280 (JP)**
• **OKAHARA, Natsumi**
**Tokyo 100-8280 (JP)**
• **MORIMOTO, Hiroyuki**
**Tokyo 100-8280 (JP)**
• **NISHIZAKI, Katsutoshi**
**Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **MAINTENANCE ASSISTANCE DEVICE, MAINTENANCE ASSISTANCE METHOD, AND PROGRAM**

(57) An equipment preservation decision support system 1 includes a load distribution estimation unit 102 which estimates at least one of a load which is applied to a maintenance object in accordance with time and a load which is applied to equipment constituting the maintenance object in accordance with time, a failure probability estimation unit 103 which predicts, on the basis of the estimated load, a failure occurrence probability which is a probability of occurrence of a failure in the equipment in accordance with time, a risk and cost calculation unit 104 which estimates a risk when operation of the maintenance object is hindered on the basis of the predicted failure occurrence probability and estimates a cost required for maintenance of the maintenance object on the basis of the failure occurrence probability. With this system, there are provided a maintenance assistance device, a maintenance assistance method, and a program capable of, at the time of maintenance of the maintenance object, obtaining information for conducting exchange, mending, and the like at a more suitable timing for each piece of equipment.

FIG. 1

## Description

Technical Field

The present invention relates to a maintenance assistance device, a maintenance assistance method, and a program. The present invention relates particularly to, e.g., a maintenance assistance device useful in maintaining a mobile object and a facility related to the mobile object in a railroad or the like.

Background Art

In order to prevent a failure of and damage to a maintenance object, performance of maintenance of pieces of equipment, such as parts and units, constituting the maintenance object, is generally conducted.
Patent Literature 1 discloses a maintenance planning apparatus which assumes that pieces of equipment have various failure rates and devises an optimum maintenance plan. The maintenance planning apparatus includes a failure rate model generation unit which generates a failure rate model on the basis of failure probability information for an O&M asset to be set by a user, a simulation execution unit which performs a simulation related to a possible failure in the O&M asset under each of a plurality of different conditions on the basis of the generated failure rate model, a KPI computation unit which computes a KPI corresponding to each of the plurality of different conditions on the basis of a result of the simulation, and an analysis unit which analyzes the plurality of different conditions and the respective KPIs corresponding to the plurality of different conditions and determines an optimum condition corresponding to the best KPI.

Citation List

Patent Literature

Patent Literature 1: Japanese Patent Laid-Open No. 2019-133412

Summary of Invention

Technical Problem

At the time of equipment maintenance, preventive preservation may be conducted. As existing preventive preservation, for example, a regular inspection which conducts a regular equipment inspection and conducts exchange, mending, and the like of equipment which may fail or be damaged is performed. A timing of occurrence of a failure or damage is different for each piece of equipment because a load applied to the equipment is different.
However, preventive preservation conducts the above-described tasks for equipment which does not require exchange, mending, and the like and is likely to become excessive maintenance. An expense required for maintenance tends to increase excessively.
The present invention has as its object to provide a maintenance assistance device, a maintenance assistance method, and a program capable of, at the time of maintenance of a maintenance object, obtaining information for conducting exchange, mending, and the like at a more suitable timing for each piece of equipment.

Solution to Problem

In order to solve the above-described problems, the present invention provides a maintenance assistance device including load estimation means for estimating at least one of a load which is applied to a maintenance object in accordance with time and a load which is applied to equipment constituting the maintenance object in accordance with time, failure prediction means for predicting, on the basis of the estimated load, a failure occurrence probability which is a probability of occurrence of a failure in the equipment in accordance with time, risk estimation means for estimating a risk when operation of the maintenance object is hindered on the basis of the predicted failure occurrence probability, and cost estimation means for estimating a cost required for maintenance of the maintenance object on the basis of the failure occurrence probability.
Also, the present invention provides a maintenance assistance device including failure prediction means for predicting a failure occurrence probability which is a probability of occurrence of a failure in equipment constituting a maintenance object in accordance with time, risk estimation means for estimating a risk when operation of the maintenance object is hindered on the basis of the predicted failure occurrence probability, cost estimation means for estimating a cost required for maintenance of the maintenance object on the basis of the failure occurrence probability, and result output means for outputting display information indicating the risk and the cost with respect to time, in which the result output means makes a comparison between a case where maintenance is conducted as scheduled on a basis or in line with a plan determined in advance and a case where details of equipment maintenance are changed and displays the risk and the cost.

Additionally, the present invention provides a maintenance assistance method including estimating at least one of a load which is applied to a maintenance object in accordance with time and a load which is applied to equipment constituting the maintenance object in accordance with time, predicting, on the basis of the estimated load, a failure occurrence probability which is a probability of occurrence of a failure in the equipment in accordance with time, estimating a risk when operation of the maintenance object is hindered on the basis of the predicted failure occurrence probability, and estimating a cost required for maintenance of the maintenance object on the basis of the failure occurrence probability.

Further, the present invention provides a program for causing a computer to implement a load estimation function of estimating at least one of a load which is applied to a maintenance object in accordance with time and a load which is applied to equipment constituting the maintenance object in accordance with time, a failure prediction function of predicting, on the basis of the estimated load, a failure occurrence probability which is a probability of occurrence of a failure in the equipment in accordance with time, a risk estimation function of estimating a risk when operation of the maintenance object is hindered on the basis of the predicted failure occurrence probability, and a cost estimation function of estimating a cost required for maintenance of the maintenance object on the basis of the failure occurrence probability.

Advantageous Effects of Invention

It is possible to provide a maintenance assistance device, a maintenance assistance method, and a program capable of, at the time of maintenance of a maintenance object, obtaining information for conducting exchange, mending, and the like at a more suitable timing for each piece of equipment.

Brief Description of Drawings

[Figure 1] Figure 1 is a diagram showing an example of an overall configuration of an equipment preservation decision support system according to a first embodiment.

[Figure 2] Figure 2 is a flowchart which explains the action of the equipment preservation decision support system according to the first embodiment.

[Figure 3] Figure 3 is a view showing a method for setting replacement details.

[Figure 4] Figure 4 shows a data example representing inspection plan information for each trainset.

[Figure 5] Figure 5 shows a data example representing equipment-related information.

[Figure 6] Figure 6 shows a data example representing load items.

[Figure 7] Figure 7 shows an example of a function of a single-equipment failure probability.

[Figure 8] Figure 8 is a flowchart showing an example of a method for calculating a single-equipment failure probability.

[Figure 9] Figure 9 is a graph showing processes in steps 205 and 206 in Figure 8.

[Figure 10] Figure 10 shows a data example representing lineside information.

[Figure 11] Figure 11 is a flowchart showing one example of a method for calculating a replacement cost.

[Figure 12] Figure 12 shows one example of a method for calculating a single-equipment failure probability of a replacement details pattern.

[Figure 13] Figure 13 shows an example of a data structure representing respective transport disorder risks, respective cumulative transport disorder risks, and respective maintenance costs of a current plan and the replacement details pattern.

[Figure 14] Figure 14 shows an output example of the respective transport disorder risks of the current plan and the replacement details pattern.

[Figure 15] Figure 15 shows an output example of respective cumulative transport disorder risks of the current plan and the replacement details pattern.

[Figure 16] Figure 16 shows an output example of respective maintenance costs of the current plan and the replacement details pattern.

[Figure 17] Figure 17 is a diagram showing an example of an overall configuration of an equipment preservation decision support system according to a second embodiment.

[Figure 18] Figure 18 is a flowchart which explains the action of the equipment preservation decision support system according to the second embodiment.

[Figure 19] Figure 19 shows an example of a data structure representing a transport disorder risk, a cumulative transport disorder risk, and a maintenance cost of a replacement details pattern candidate.

[Figure 20] Figure 20 shows an example of a data structure representing a maximum value for a transport disorder risk, a cumulative transport disorder risk, a maintenance cost, and the sum of the cumulative transport disorder risk and the maintenance cost.

[Figure 21] Figure 21 is a diagram showing an example of an overall configuration of an equipment preservation decision support system according to a third embodiment.

[Figure 22] Figure 22 shows a data example representing load items which affect an equipment failure in railroad ground equipment.

[Figure 23] Figure 23 is a flowchart which explains the action of the equipment preservation decision support system according to the third embodiment.

[Figure 24] Figure 24 shows an activity chart at a site of maintenance of a railroad vehicle.

Description of Embodiments

Embodiments of the present invention will be described below in detail with reference to the accompanying drawings through first to fifth embodiments.

First, a first embodiment of an equipment preservation decision support system 1 to which the present embodiments are applied will be described. In the first embodiment, the equipment preservation decision support system 1 estimates a transport disorder risk, a cumulative transport disorder risk, and a maintenance cost of a maintenance object and provides these pieces of information to a maintenance manager. At this time, the equipment preservation decision support system 1 estimates a transport disorder risk, a cumulative transport disorder risk, and a maintenance cost for each of a case where equipment maintenance is conducted as scheduled on a basis determined and a case where maintenance is conducted with equipment to be subjected to exchange, mending, and the like changed.

[First Embodiment]

<Description of Whole of Equipment Preservation Decision Support System 1>

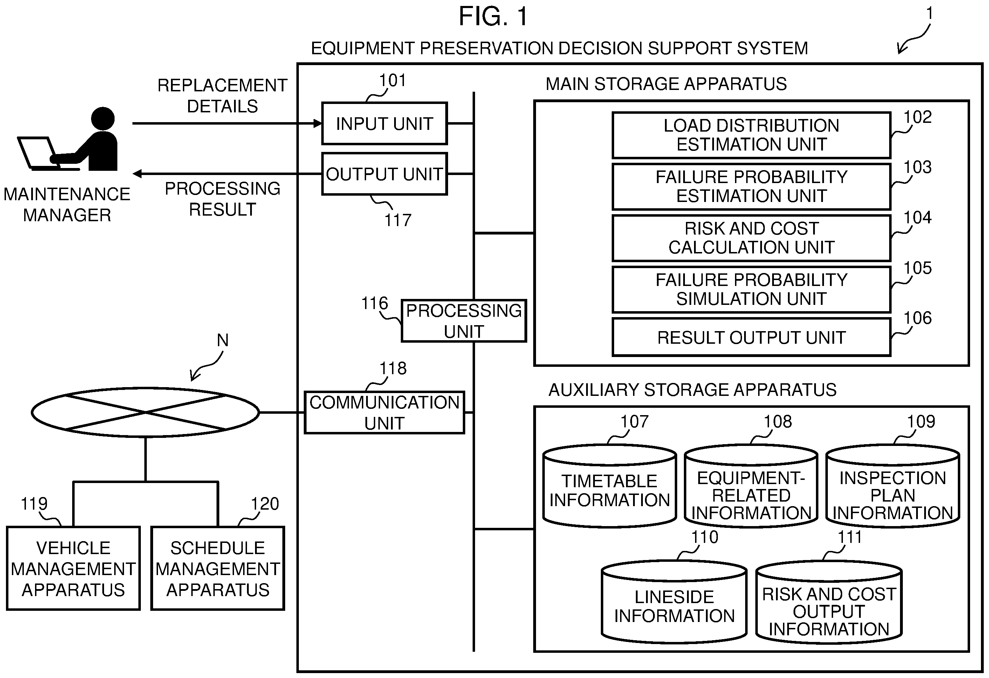

Figure 1 is a diagram showing an example of an overall configuration of an equipment preservation decision support system 1 according to a first embodiment.

The shown equipment preservation decision support system 1 is an apparatus which supports devisal of a plan to maintain a maintenance object. The maintenance object is an object to be maintained and is not particularly limited as long as the maintenance object needs to be maintained. It does not matter whether the maintenance object is a movable property or an immovable property. Examples of the maintenance object include a mobile object, a facility related to the mobile object, a manufacturing plant of a factory, and a power plant of a power station. A railroad vehicle, an airplane, a truck, a bus, a ship, or the like is named as the mobile object. The facility related to the mobile object is a facility needed to run the mobile object. In the present embodiment, the following description will be given taking a railroad vehicle as an example of the maintenance object. That is, a case where maintenance of a railroad vehicle is conducted will be described.

Thus, the equipment preservation decision support system 1 according to the present embodiment serves as one example of a maintenance assistance device which supports devisal of a plan for exchange, mending, and the like of equipment which a railroad vehicle has at the time of maintenance of the railroad vehicle. The equipment here is a unit or a part constituting a maintenance object. In the case of a railroad vehicle, the equipment is, for example, a door unit made up of a door and a mechanism for opening and closing the door, a motor unit made up of, e.g., a motor which generates drive force and a gear which transmits the drive force to wheels, an air conditioning unit which adjusts the temperature and humidity of air in the railroad vehicle, or the like.

A maintenance manager which is a manager of maintenance of railroad vehicles, a vehicle management apparatus 119 which stores inspection plan information and equipment-related information for the railroad vehicles, and a schedule management apparatus 120 which stores planned schedule information that is information on a timetable (hereinafter, also simply referred to as a "schedule") and travel track record information that is information on a travel track record of a trainset are shown in Figure 1 though the maintenance manager, the vehicle management apparatus 119, and the schedule management apparatus 120 are not constituents of the equipment preservation decision support system 1. The equipment preservation decision support system 1, the vehicle management apparatus 119, and the schedule management apparatus 120 are connected via a network N.

The equipment preservation decision support system 1 is composed of a computer apparatus including information processing resources, such as an input interface, a storage device (a main storage apparatus and an auxiliary storage apparatus), a processor (CPU (Central Processing Unit)), a display apparatus (e.g., a liquid crystal display apparatus), a communication unit, and a bus interconnecting the units.

The input interface corresponds to an input unit 101, and the maintenance manager gives an instruction for entry of replacement details and execution of processing (to be described later in detail).

The storage device is an apparatus mounted with the main storage apparatus (e.g., a memory) and the auxiliary storage apparatus (e.g., a storage, such as an HDD (Hard Disk Drive) or an SSD (Solid State Drive).

A program for implementing functions to be described in the present embodiment is stored in the main storage apparatus. The storage device here corresponds to a load distribution estimation unit 102, a failure probability estimation unit 103, a risk and cost calculation unit 104, a failure probability simulation unit 105, and a result output unit 106.

Various pieces of information (travel plan information 107, equipment-related information 108, inspection plan information 109, lineside information 110, and risk and cost output information 111) to be used in the present embodiment are stored in the auxiliary storage apparatus.

The processor corresponds to a processing unit 116 and implements various types of functions by functioning as an operation execution unit which executes processing of the above-described program.

The display apparatus corresponds to an output unit 117 and allows confirmation of replacement details and a processing result output by the equipment preservation decision support system 1.

The communication unit corresponds to a communication unit 118. The communication unit accepts inspection plan information or equipment-related information which is sent from the vehicle management apparatus 119 located outside the equipment preservation decision support system 1 and stores the information in the auxiliary storage apparatus. Similarly, the communication unit 118 accepts planned schedule information or travel track record information which is sent from the schedule management apparatus 120 and stores the information in the auxiliary storage apparatus.

The bus links the input interface, the storage device, the processor, the display apparatus, and the communication unit and passes information between the units.

The network N is communication means used for information communication between the equipment preservation decision support system 1, the vehicle management apparatus 119, and the schedule management apparatus 120 and is, for example, the Internet, a LAN (Local Area Network), or a WAN (Wide Area Network). A communication line used for data communication may be a wired line or a radio link, and both a wired line and a radio link may be used in combination. The equipment preservation decision support system 1, the vehicle management apparatus 119, and the schedule management apparatus 120 may be connected using a repeating apparatus, such as a gateway apparatus or a router, via a plurality of networks and communication lines.

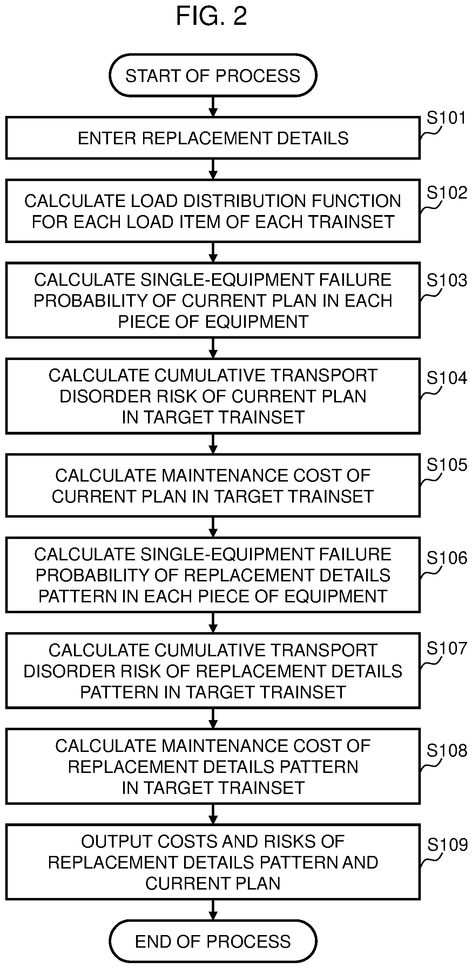

Figure 2 is a flowchart which explains the action of the equipment preservation decision support system 1 according to the first embodiment.

First, the maintenance manager sets replacement details desired to be analyzed at the time of equipment maintenance to enter the replacement details into the equipment preservation decision support system 1 (step 101). This corresponds to a process to be conducted by the input unit 101 in Figure 1. The replacement details here are information on equipment which the maintenance manager desires to replace. A specific example of a method for setting the replacement details will be illustrated below.

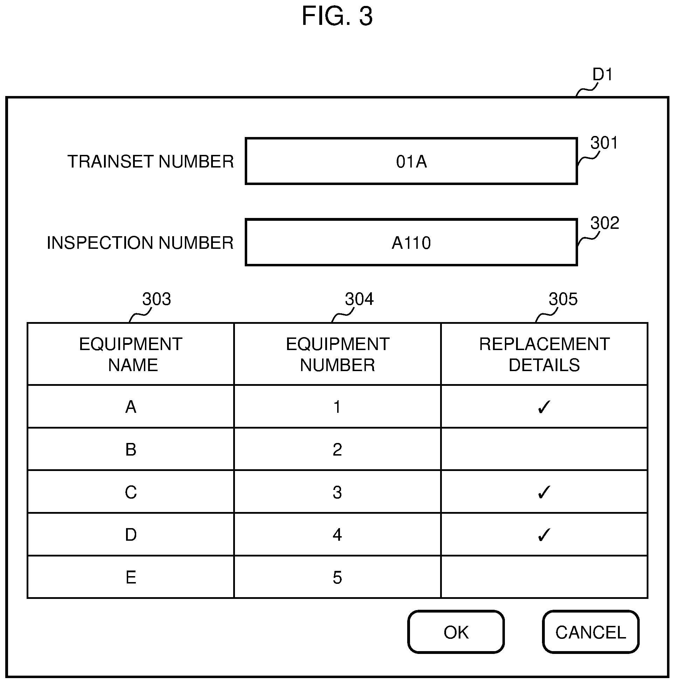

Figure 3 is a view showing a method for setting replacement details.

A dialog D1 is displayed on the output unit 117 in Figure 3. The maintenance manager enters replacement details using the dialog D1 and sets the replacement details.

In the dialog D1, a trainset number is a number indicating a trainset, and the maintenance manager enters a trainset number as an analysis object into an entry field 301. A trainset is a trainset of railroad vehicles, and each trainset is made up of one or a plurality of coupled railroad vehicles.

An inspection number is a number indicating a regular inspection, and the maintenance manager enters a regular inspection number as an analysis object into an entry field 302.

An equipment name 303 indicates a name which is uniquely set for each piece of equipment, and an equipment number 304 indicates a number which is uniquely set for each piece of equipment.

Replacement details 305 indicate equipment as a replacement object, and the maintenance manager enters a checkmark for equipment desired to be replaced.

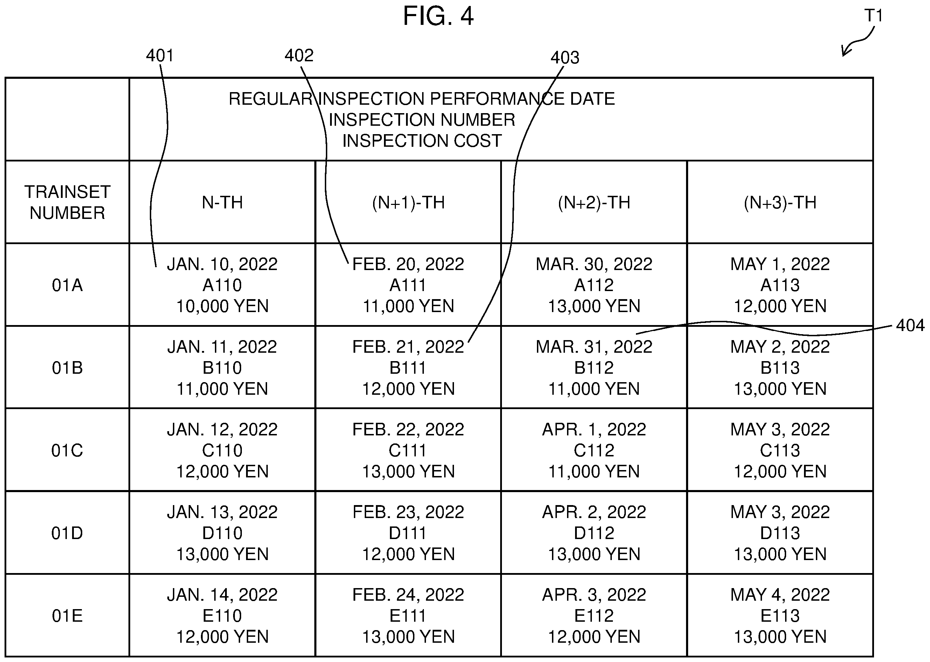

Figure 4 shows a data example representing inspection plan information for each trainset.

This corresponds to the inspection plan information 109 in Figure 1. The inspection plan information is information on an inspection plan which is defined for each trainset. The inspection plan is defined for each trainset and indicates details of a regular inspection plan for the trainset. The regular inspection plan for each trainset is shown in a table T1. In the table T1, for example, a field 401 indicates a performance date (Jan. 10, 2022), an inspection number (A110), and an inspection cost (10,000 yen) of an N-th regular inspection for a trainset with a trainset number of 01A. Also, a field 402 indicates a performance date (Feb. 20, 2022), an inspection number (A111), and an inspection cost (11,000 yen) of an (N+1)-th regular inspection for the trainset with the trainset number of 01A. Additionally, a field 403 indicates a performance date (Feb. 21, 2022), an inspection number (B111), and an inspection cost (12,000 yen) of an (N+1)-th regular inspection for a trainset with a trainset number of 01B. Further, a field 404 indicates a performance date (Mar. 31, 2022), an inspection number (B112), and an inspection cost (11,000 yen) of an (N+2)-th regular inspection for the trainset with the trainset number of 01B.

Note that a regular inspection next to an N-th regular inspection is an (N+1)-th regular inspection. A regular inspection next to the (N+1)-th regular inspection is an (N+2)-th regular inspection, and a regular inspection next to the (N+2)-th regular inspection is an (N+3)-th regular inspection.

Although various methods are available to set these pieces of information (data), the pieces of data can be acquired by receiving inspection plan information from the vehicle management apparatus 119 in Figure 1.

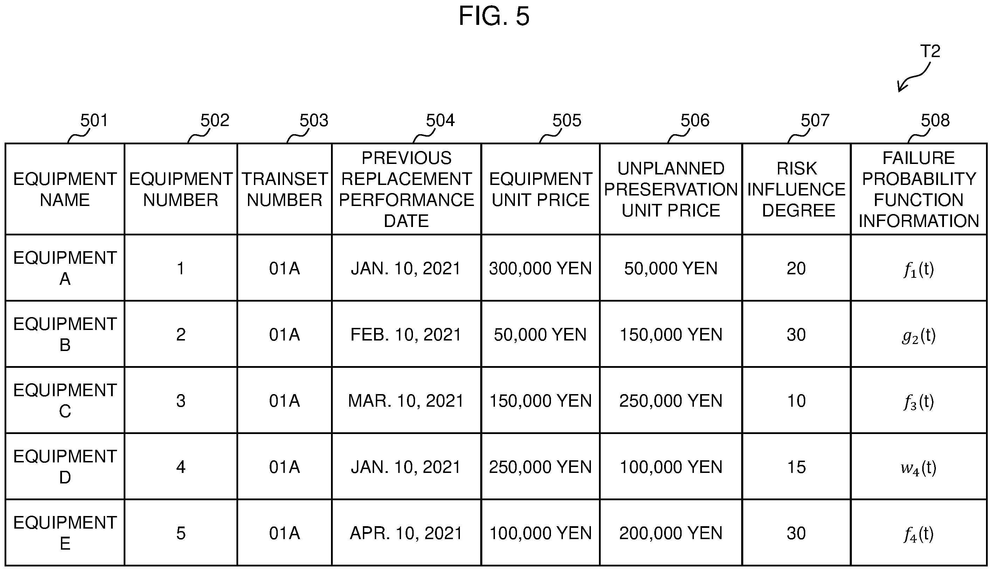

Figure 5 shows a data example representing equipment-related information.

The equipment-related information is information on pieces of equipment constituting each trainset. The equipment-related information corresponds to the equipment-related information 108 in Figure 1. The equipment-related information is represented by a table T2 including, for each of equipment A to equipment E, an equipment name 501, an equipment number 502, a trainset number 503, a previous replacement performance date 504, an equipment unit price 505, an unplanned preservation unit price 506, a risk influence degree 507, and failure probability function information 508.

The equipment name 501 is a name which is uniquely set for each piece of equipment, and the equipment number 502 is a number which is uniquely set for each piece of equipment.

The trainset number 503 indicates a number of a trainset in which equipment is installed. The previous replacement performance date 504 indicates a date and time when most recent replacement of the equipment was conducted. The equipment unit price 505 indicates an expense of purchase of one piece of equipment to replacement. The unplanned preservation unit price 506 indicates an expense caused upon occurrence of unplanned preservation of equipment. Although various methods are available to set these pieces of information, the setting can be implemented by receiving equipment-related information from the vehicle management apparatus 119 in Figure 1.

The risk influence degree 507 indicates a weight of the degree of influence of an equipment failure and is used at the time of calculation of an equipment failure risk (to be described later in detail). An increase in value of the risk influence degree 507 means that an equipment failure is more influential. Although various methods are conceivable to set the risk influence degree 507, a given value may be adopted.

The failure probability function information 508 indicates a single-unit failure probability function which is used at the time of calculation of a single-equipment failure probability (to be described later in detail). The single-unit failure probability function is set for each piece of equipment and is used at the time of calculation of the single-equipment failure probability. Although various methods are conceivable to set the single-unit failure probability function, a case using a Weibull distribution function (to be described later in detail) is named as one example. Note that information other than the above-described ones may be added to the equipment-related information.

Referring back to Figure 2, the equipment preservation decision support system 1 then calculates a load distribution function for each load item of each trainset (step 102). The load distribution function calculation is a process to be conducted by the load distribution estimation unit 102 in Figure 1.

The load item is an item which affects a failure of equipment installed in a trainset as a maintenance object. The load distribution function is a function indicating a distribution of a load amount per unit time for each trainset. The unit time is, for example, one day. The load distribution function is calculated for each load item in a route to be traveled by a trainset as an analysis object. Thus, if there are a plurality of load items, a plurality of load distribution functions corresponding to the number of load items are calculated. The load distribution function calculation allows quantitative estimation of loads on respective pieces of equipment.

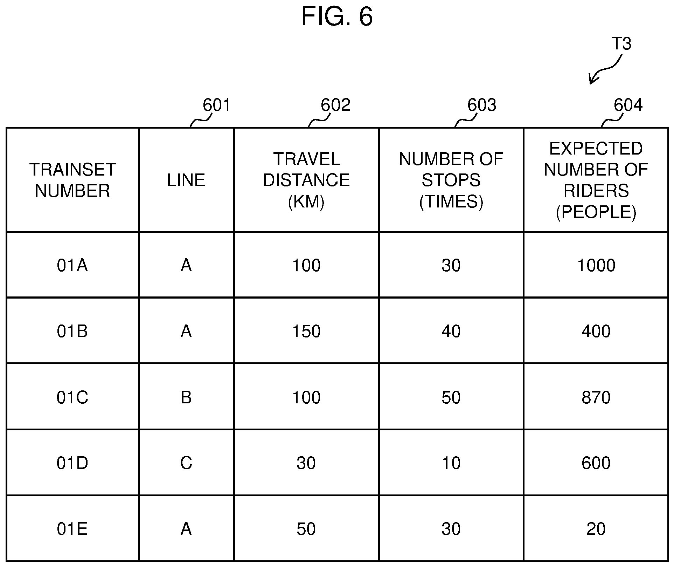

Figure 6 shows a data example representing load items.

The load items correspond to the travel plan information 107 in Figure 1. Figure 6 shows travel route information on one given day as load items. The travel route information given here is a combination of a line 601, a travel distance 602, the number of stops 603, and the expected number of riders 604. The travel route information is indicated in Figure 6 by a table T3 in which pieces of travel route information of trainsets with trainset numbers of 01A to 01E are arranged.

The line 601 indicates a line as a travel object for each trainset on one given day. The travel distance 602 indicates a total distance traveled by each trainset on the one given day. The number of stops 603 indicates the total number of stations at which each trainset stops on the one given day. The expected number of riders 604 indicates the total number of people which are assumed to ride on each trainset on the one given day.

Although various methods are available to set these pieces of information, the setting can be implemented by receiving planned schedule information, travel track record information, and the like from, e.g., the schedule management apparatus 120 in Figure 1. Note that a load item other than the above-described ones may be added as long as the load item is a load which affects an equipment failure.

The load distribution function is obtained by the load distribution estimation unit 102 in Figure 1. That is, the load distribution estimation unit 102 is one example of load estimation means for estimating a load which is applied to equipment constituting a maintenance object in accordance with time for each piece of equipment. Although various calculation methods are conceivable for the load distribution function depending on the equipment, one example of a calculation method will be described below.

If a load distribution function is calculated for a travel distance by a generalized linear equation, the load distribution function can be obtained by, for example, Expression 1 below. [Expression 1]

$$x_k(t) = a*x(t)+b \qquad (1)$$

In Expression 1, t is a given time point, x(t) is the travel distance 602 on one given day, and a and b are given coefficients. The calculation method is not limited to the method given here, and another means, such as statistical and machine learning, may be used. To calculate a load distribution function for the number of stops, x(t) above is regarded as the number of stops 603 on one given day. To calculate a load distribution function for the number of riders, x(t) above is regarded as the expected number of riders 604 on one given day.

Referring back to Figure 2, the equipment preservation decision support system 1 then calculates a single-equipment failure probability of a current plan for each piece of equipment (step 103). The current plan is a maintenance plan in a case where maintenance is conducted as scheduled on a basis or in line with a plan determined for each piece of equipment. The single-equipment failure probability is a probability of occurrence of a failure for each piece of equipment. The single-equipment failure probability is obtained on the basis of load distribution functions by the failure probability estimation unit 103 in Figure 1. The failure probability estimation unit 103 functions as failure prediction means for predicting a failure occurrence probability which is a probability of occurrence of a failure in equipment in accordance with time on the basis of loads estimated in step 102. The single-equipment failure probability is one example of the failure occurrence probability. The single-equipment failure probability is predicted using the amount of load accumulated as an explanation variable. The single-equipment failure probability is characteristically returned to an initial value set in advance by conducting equipment replacement. Note that there are a plurality of pieces of equipment in a trainset as an analysis object, respective single-equipment failure probabilities are calculated for all the pieces of equipment.

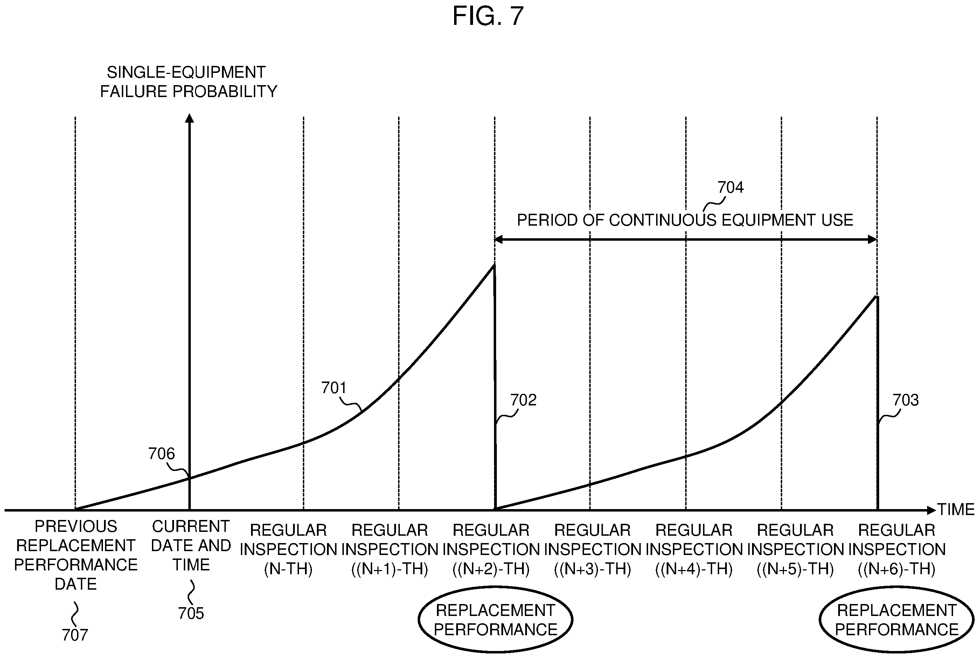

Figure 7 shows an example of a function of the single-equipment failure probability.

In Figure 7, the abscissa axis indicates time, and a solid line 701 indicates a single-equipment failure probability of target equipment. The present embodiment illustrates a case where a prediction that equipment replacement will be performed at a regular inspection (an (N+2)-th) denoted by reference numeral 702 and at a regular inspection (an (N+6)-th) denoted by reference numeral 703 is made. The single-equipment failure probability is shown to be displaced at these times. This shows displacements in the single-equipment failure probability when equipment replacement is predicted to be conducted at the times, and equipment replacement is performed as predicted. That is, since the amount of load accumulated in the equipment becomes 0 when equipment replacement is performed, the single-equipment failure probability returns to an initial value when the equipment replacement is performed. A period 704 indicates a period between equipment replacements and is a period for which the equipment continues to be used. The period 704 will hereinafter be called a "period of continuous equipment use."

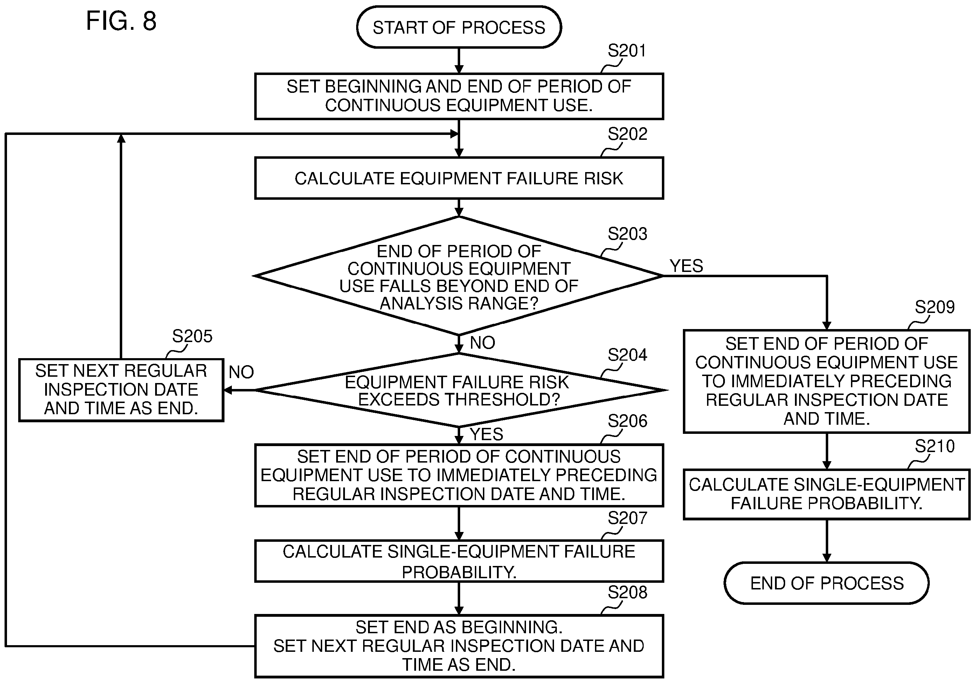

Figure 8 is a flowchart showing one example of a method for calculating the single-equipment failure probability.

The method for calculating the single-equipment failure probability varies depending on the replacement and repair operation method. The calculation method shown in Figure 8 is premised on risk-based operation.

In the present embodiment, operation by risks is an operation method which makes a decision on replacement and repair such that an equipment failure risk amount of each piece of equipment does not exceed a threshold. This warrants safety of each piece of equipment. Besides risk-based operation, regular inspection-based operation in which each piece of equipment is periodically replaced at intervals defined in advance is also conceivable.

First, the failure probability estimation unit 103 sets a previous replacement performance date as a beginning of a period of continuous equipment use and sets a current date and time as an end of the period of continuous equipment use (step 201).

The process in step 201 will be described using the example in Figure 7. Reference numeral 705 denotes the current date and time. Since equipment replacement may not be performed at the current date and time 705, an intercept 706 needs to be obtained as a single-equipment failure probability at the current date and time. To obtain the intercept 706, the single-equipment failure probability needs to be calculated from the amount of load accumulated in equipment from a previous replacement performance date 707 to the current date and time. It is thus necessary to set the previous replacement performance date as a beginning of a period of continuous equipment use and set the current date and time as an end of the period of continuous equipment use.

Referring back to Figure 8, the failure probability estimation unit 103 then calculates an equipment failure risk (step 202).

The equipment failure risk is a value indicating the degree of influence of an equipment failure. Increase in the value indicates increase in a risk of damage from the equipment failure.

Although various methods are conceivable to calculate the equipment failure risk, the equipment failure risk is calculated here from the product of a single-equipment failure probability using accumulated load amount functions as an explanation variable and the risk influence degree 507 (see Figure 5).

Specifically, the failure probability estimation unit 103 first calculates accumulated load amount functions as the amounts of load accumulated. Each accumulated load amount function indicates the amount of load accumulated at a given time point. The calculation of the accumulated load amount functions allows quantitative estimation of the amounts of load accumulated for each piece of equipment.

Although various methods are conceivable to calculate the accumulated load amount functions, one example of a calculation method will be described below. An accumulated load amount function D(t) can be obtained by, for example, Expression 2 below.

[Expression 2]

$$D(t) = \int_{a1}^{t} x_k(t) \qquad \cdots\cdots(2)$$

In Expression 2, t is a given time, al is a time which is set as a beginning of a period of continuous equipment use, and Xk is a load distribution function for a given load item.

Note that, if there are a plurality of load distribution functions, the same processing is repeated. Although a function indicating a distribution of a load amount per unit time for each trainset is adopted as the load distribution function in this example, a function indicating a distribution of a load amount per unit time for each piece of equipment may be adopted as the load distribution function.

The failure probability estimation unit 103 then calculates a single-equipment failure probability using the accumulated load amount functions. Although various methods are conceivable to calculate the single-equipment failure probability from the accumulated load amount functions, a Weibull distribution function is used as an example here. A Weibull distribution function f(t) is represented by, for example, Expression 3 below.

[Expression 3]

$$f(t) = \frac{m}{\eta} \left(\frac{t}{\eta}\right)^{m-1} \exp\left\{-\left(\frac{t}{\eta}\right)^{m}\right\} \qquad \cdots\cdots(3)$$

In Expression 3, m is a Weibull distribution coefficient, and $\eta$ is a scale parameter.

The single-equipment failure probability using the accumulated load amount functions as an explanation variable is calculated as the Weibull distribution function f(t) by substituting the accumulated load amount functions into a variable t of the Weibull distribution function f(t). Note that, if there are a plurality of load distribution functions, a plurality of explanation variables may be provided for a single-equipment failure probability.

Note that a parameter and a coefficient of the Weibull distribution function are set different for each piece of equipment.

The failure probability estimation unit 103 then judges whether the end of the period of continuous equipment use falls beyond an end of an analysis range (step 203).

If the end of the period of continuous equipment use does not fall beyond the end of the analysis range (NO in step 203), the flow advances to step 204. On the other hand, if the end falls beyond the end (YES in step 203), the flow advances to step 209. Note that although the end of the analysis range may be at a given date and time, a given regular inspection date and time is assumed here to be set as the end of the analysis range.

If the end of the period of continuous equipment use does not fall beyond the end of the analysis range (NO in step 203), whether the calculated equipment failure risk exceeds a threshold is judged during the period of continuous equipment use (step 204).

If a result of the judgment shows the equipment failure risk does not exceed the threshold (NO in step 204), the flow advances to step 205. On the other hand, if the equipment failure risk exceeds the threshold (YES in step 204), the flow advances to step 206. The threshold may be a given value.

If the equipment failure risk does not exceed the threshold (NO in step 204), the end of the period of continuous equipment use is set to a next regular inspection performance date (step 205). On the other hand, if the equipment failure risk exceeds the threshold (YES in step 204), the end of the period of continuous equipment use is determined to be an immediately preceding regular inspection performance date (step 206).

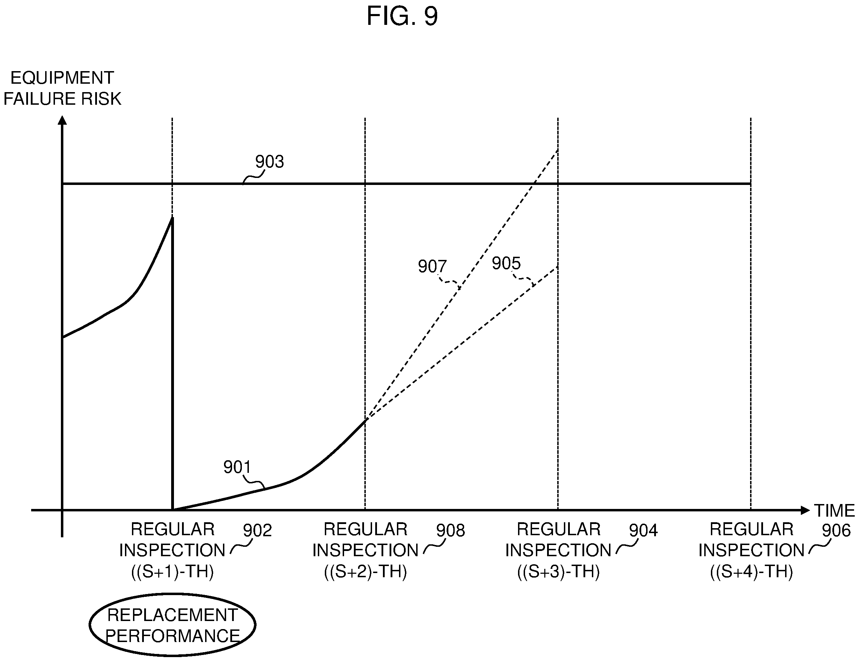

Figure 9 is a graph showing the processes in steps 205 and 206 in Figure 8. In Figure 9, the abscissa axis indicates time, and the ordinate axis indicates an equipment failure risk.

In Figure 9, reference numeral 901 denotes a function representing the equipment failure risk. Since equipment replacement is already performed at a regular inspection (an (S+1)-th) denoted by reference numeral 902, reference numeral 902 indicates a beginning of a period of continuous equipment use. Reference numeral 903 denotes a threshold for the equipment failure risk, and the threshold 903 that should not be exceeded is set for the equipment failure risk. Note that the threshold 903 may be different for each piece of equipment. A time point of a regular inspection (an (S+3)-th) denoted by reference numeral 904 is regarded as an end of the period of continuous equipment use, and an equipment failure risk at the time point of the regular inspection (the (S+3)-th) as an end of the period of continuous equipment use is calculated.

If the calculated equipment failure risk does not exceed the threshold, as indicated by a dotted line 905, whether the equipment failure risk at a time point of a regular inspection (an (S+4)-th) denoted by reference numeral 906 exceeds the threshold needs to be judged. It is thus necessary to set the time point of the regular inspection (the (S+4)-th) as the end of the period of continuous equipment use. This corresponds to step 205 in Figure 8.

On the other hand, if the calculated equipment failure risk exceeds the threshold, as indicated by a dotted line 907, equipment replacement needs to be performed at a time point of a regular inspection (an (S+2)-th) denoted by reference numeral 908. For this reason, the end of the period of continuous equipment use is determined to be the time point of the regular inspection (the (S+2)-th). This corresponds to step 206 in Figure 8.

Refer back to Figure 8. After step 206, a single-equipment failure probability during the determined period of continuous equipment use is calculated (step 207).

The single-equipment failure probability is calculated by the same method as in step 202. The calculated single-equipment failure probability is output as a single-equipment failure probability for the determined period of continuous equipment use.

A regular inspection performance date set thus far as the end of the period of continuous equipment use is set as the beginning of the period of continuous equipment use, and a regular inspection performance date next to the regular inspection set as the beginning is set as the end of the period of continuous equipment use (step 208).

To obtain a single-equipment failure probability during a next period of continuous use, an end of a previous period of continuous equipment use needs to be set as a beginning of a next period of continuous equipment use. Thus, the flow returns to step 202 to execute equipment failure risk processing during the next period of continuous equipment use.

If the end of the period of continuous equipment use falls beyond the end of the analysis range (YES in step 203), the end of the period of continuous equipment use is determined to be the immediately preceding regular inspection performance date (step 209). If the end falls beyond the end of the analysis range, the end of the analysis range is set as the end of the period of continuous equipment regardless of whether an equipment failure risk at a next regular inspection exceeds the threshold.

Finally, a single-equipment failure probability during the determined period of continuous equipment use is calculated (step 210). The single-equipment failure probability is calculated by the same method as in step 202. The calculated single-equipment failure probability is output as a single-equipment failure probability within the determined period of continuous equipment use.

As described above, the failure probability estimation unit 103 uses the single-equipment failure probability calculated in step 207 or step 210 as a single-equipment failure probability of the current plan.

As shown in Figure 8, an upper limit for an equipment failure risk which is the degree of influence degree of an equipment failure is defined, and the failure probability estimation unit 103 fixes a due date for equipment replacement performance (maintenance performance) on the basis of the upper limit. This can also be said that the failure probability estimation unit 103 estimates the due date for the equipment replacement performance (maintenance performance) on the basis of the upper limit.

Refer back to Figure 2. The equipment preservation decision support system 1 calculates a cumulative transport disorder risk of the current plan (step 104).

The cumulative transport disorder risk is obtained by the risk and cost calculation unit 104 in Figure 1. The transport disorder risk indicates an expected value of an economic loss caused by occurrence of a transport disorder resulting from an equipment failure at a certain time point in a given trainset. The transport disorder risk can be assessed by the same indicator as for a cost, such as a maintenance cost, by regarding the transport disorder risk as an economic loss. The cumulative transport disorder risk indicates a cumulation of the transport disorder risk from a current time of day in a given trainset. The transport disorder risk and the cumulative transport disorder risk are examples of a risk when operation of the maintenance object is.hindered.

Although various methods are conceivable to calculate the transport disorder risk, one example will be described. The transport disorder risk can be obtained by Expression 4 below.

[Expression 4]

$$r(t) = w(t) \times a \times b \times c \div (d \times e) \qquad (4)$$

In Expression 4, t is a given time point, w(t) is a trainset failure probability at a given time in a given trainset, a is the number of passengers per unit time (people), b is a time of recovery from a transport disorder (hours), c is the GDP of a lineside local government, d is the population of the lineside local government, and e is average annual hours worked of the lineside local government.

Among the parameters, the trainset failure probability indicates a failure probability of a whole trainset. The trainset failure probability can be calculated from respective single-equipment failure probabilities of pieces of equipment. Although various methods are conceivable as a calculation method depending on the configuration of the pieces of equipment, one example of the calculation method will be described below. In the case of a trainset in which pieces of equipment are coupled in series, the trainset failure probability can be obtained by Expression 5 below.
[Expression 5]

$$W(t) = 1 - \{(1 - F_1(t)) \times (1 - (F_2(t)) \times \ldots (1 - F_Z(t))\} \qquad (5)$$

In Expression 5, t is a given time point, $F_m(t)$ is a single-equipment failure probability at the given time point of given equipment, and Z is the number of pieces of equipment mounted in a given trainset.

The number of passengers per unit time (people) denoted by a, the time of recovery from a transport disorder (hours) denoted by b, the GDP of the lineside local government denoted by c, the population of the lineside local government denoted by d, and the average annual hours worked of the lineside local government denoted by e are acquired from lineside information illustrated below.

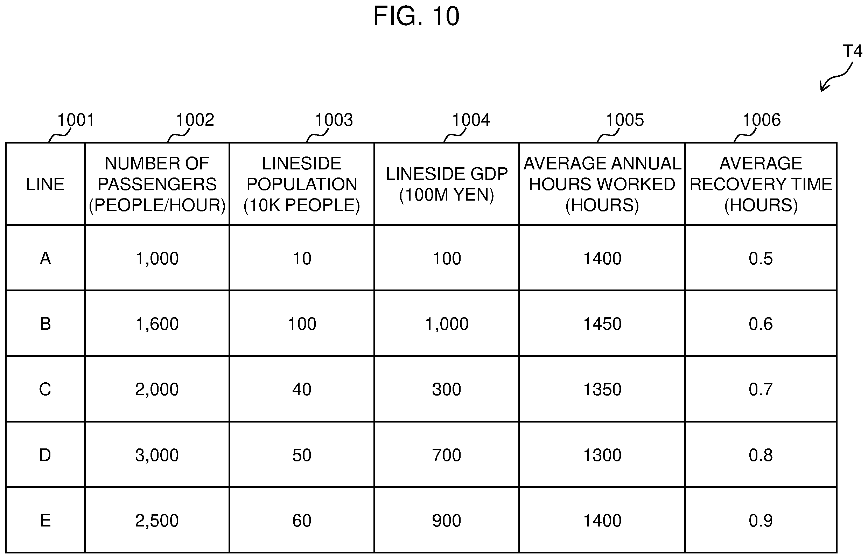

Figure 10 shows a data example representing lineside information.

The lineside information corresponds to the lineside information 110 in Figure 1. The lineside information is represented by a table T4.

A line 1001 indicates a target line, and the number of passengers 1002 indicates the average number of passengers per unit time on the target line. Although various methods are conceivable to set values, the values may be calculated from track record information, such as statistical information of a transport track record.

A lineside population 1003 indicates the population of a local government along the target line, and a lineside GDP 1004 indicates the GDP of the local government along the target line.

Average annual hours worked 1005 indicate an average for annual hours worked of the local government along the target line. Although various methods are conceivable to set a value of the average annual hours worked 1005, statistical information of the local government, and the like may be used.

An average recovery time 1006 indicates an average time which is spent to service recovery when an equipment failure occurs. Although various methods are conceivable to set a value of the average recovery time 1006, the value may be calculated from track record information, such as statistical information of a transport disorder.

Note that information other than the above-described ones may be added to the lineside information.

Finally, the cumulative transport disorder risk is calculated. The transport disorder risk indicates a risk at one point, and a medium- and long-term risk assessment cannot be made. Since a medium- and long-term risk can be assessed by obtaining a cumulative sum of the transport disorder risk, the cumulative transport disorder risk needs to be calculated. Although various calculation methods are conceivable for the cumulative transport disorder risk, one example of a calculation method will be illustrated below. The cumulative transport disorder risk can be obtained by Expression 6 below.
[Expression 6]

$$R(t) = \int_0^t r(t)\, dt \qquad \cdots\cdots(6)$$

In Expression 6, r(t) is a transport disorder risk at a given time point, and t is the given time point.

Refer back to Figure 2. The equipment preservation decision support system 1 then calculates a maintenance cost of the current plan in a target trainset (step 105).

The maintenance cost of the current plan is obtained by the risk and cost calculation unit 104 in Figure 1. The maintenance cost indicates an expected value of a life-cycle cost spent for maintenance at a certain time point when replacement is conducted in accordance with the current plan.

Although various methods are conceivable as a method for calculating the maintenance cost depending on the maintenance operation method, one example will be described. The maintenance cost is calculated from the sum of an unplanned preservation cost, a replacement cost, and an inspection cost. This allows higher-accuracy calculation of the maintenance cost.

First, the unplanned preservation cost indicates an expected value of an additional cost incurred when unplanned repair (hereinafter called "unplanned preservation") occurs due to, e.g., an equipment failure in a given trainset. That is, the unplanned preservation cost is an expense required for unplanned maintenance of the trainset as a maintenance object. The unplanned preservation cost can be obtained by Expression 7 below.
[Expression 7]

$$S(t) = \sum_{k=1}^{Z} a_m * Y_m(t) \qquad \cdots\cdots(7)$$

In Expression 7, S is an unplanned preservation cost of the whole trainset, Z is the number of pieces of equipment which the given trainset has, $a_m$ is an unplanned preservation unit price in given equipment, and $Y_m$ is a single-equipment failure probability in the given equipment.

The replacement cost indicates the total sum of life cycle costs of pieces of equipment.

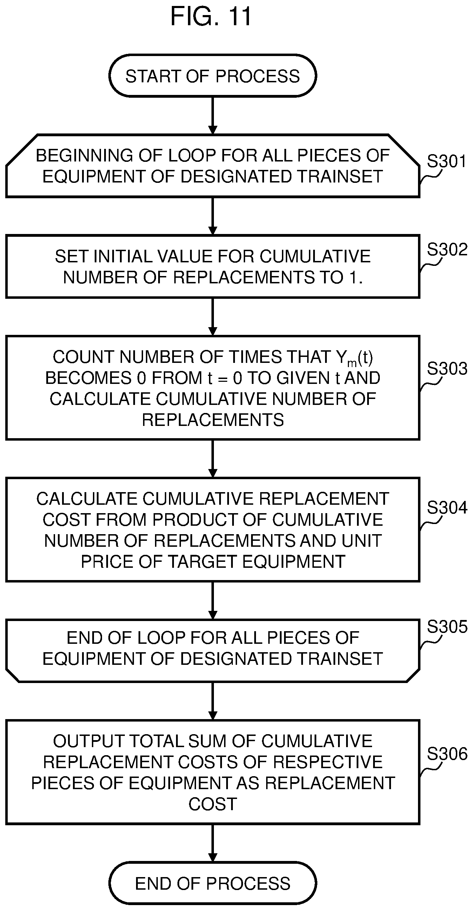

Figure 11 is a flowchart showing one example of a method for calculating the replacement cost.

First, step 301 indicates a beginning of a change loop for pieces of target equipment in estimation of the replacement cost.

The risk and cost calculation unit 104 sets an initial value for the cumulative number of replacements to 1 (step 302).

When a calculated single-equipment failure probability becomes 0 at one certain point, replacement occurs. The risk and cost calculation unit 104 adds the number of times that the single-equipment failure probability $Y_m$ becomes 0 ($Y_m$ (t) = 0) from the current time of day to a given time point to calculate the cumulative number of replacements (step 303).

The risk and cost calculation unit 104 calculates, from the product of the calculated cumulative number of replacements and a unit price of the target equipment, a cumulative replacement cost as a life-cycle cost of the equipment from the current time of day to the given time point (step 304).

Step 305 indicates an end of the change loop for the pieces of target equipment in the estimation of the replacement cost.

The risk and cost calculation unit 104 calculates the total sum of cumulative replacement costs calculated for the respective pieces of equipment as a replacement cost in a trainset (step 306).

Finally, the inspection cost indicates the total expense spent for regular inspections from a current date and time to a given time point. This can also be said to be an expense required for the regular inspections from the current date and time to the given time point. One example of a method for calculating the inspection cost will be described below.

The inspection cost is calculated by a trainset as an analysis object adding up inspection costs of respective regular inspections planned for a current time of day to a given time point. A specific calculation method will be described with reference to Figure 4. Assume that a trainset number as an analysis object is 01B, a current date and time is Feb. 1, 2022, and that an inspection cost up to May 1, 2022 is to be obtained. Regular inspections with an inspection number of B111 shown in the field 403 and an inspection number of B112 shown in the field 404 are included. For this reason, the inspection cost can be calculated by adding up inspection costs of the inspection number of B111 and the inspection number of B112.

The risk and cost calculation unit 104 calculates, as the maintenance cost, the sum of the unplanned preservation cost, the replacement cost, and the inspection cost.

The risk and cost calculation unit 104 is one example of risk estimation means for estimating a risk when operation of a maintenance object is hindered (a cumulative transport disorder risk here, which is an expected value of a loss caused by occurrence of a failure in the maintenance object here) on the basis of a predicted failure occurrence probability (a single-equipment failure probability here). Also, the risk and cost calculation unit 104 is one example of cost estimation means for estimating a cost required for maintenance of a maintenance object (a maintenance cost here) on the basis of a failure occurrence probability (a single-equipment failure probability here). Although maintenance is performed on the basis of equipment failure risks for respective pieces of equipment in the case of the current plan, risk and cost can be balanced in the present embodiment by making a judgment on replacement and repair in terms of risks and costs of a whole trainset.

Refer back to Figure 2 again. The equipment preservation decision support system 1 then calculates a single-equipment failure probability (a single-equipment failure probability with the replacement details set by the maintenance manager) in a replacement details pattern in each piece of equipment (step 106). The replacement details pattern is a maintenance plan with maintenance details set by the maintenance manager adhering to a basis or a plan determined for each piece of equipment and is a maintenance plan with the replacement details described with reference to Figure 3. This is a process to be conducted by the failure probability simulation unit 105 in Figure 1. That is, the failure probability simulation unit 105 calculates a single-equipment failure probability of each piece of equipment in a case where equipment replacement is performed on the basis of the replacement details entered in step 101. Various calculation methods are conceivable for a single-equipment failure probability of the replacement details pattern depending on the operation method.

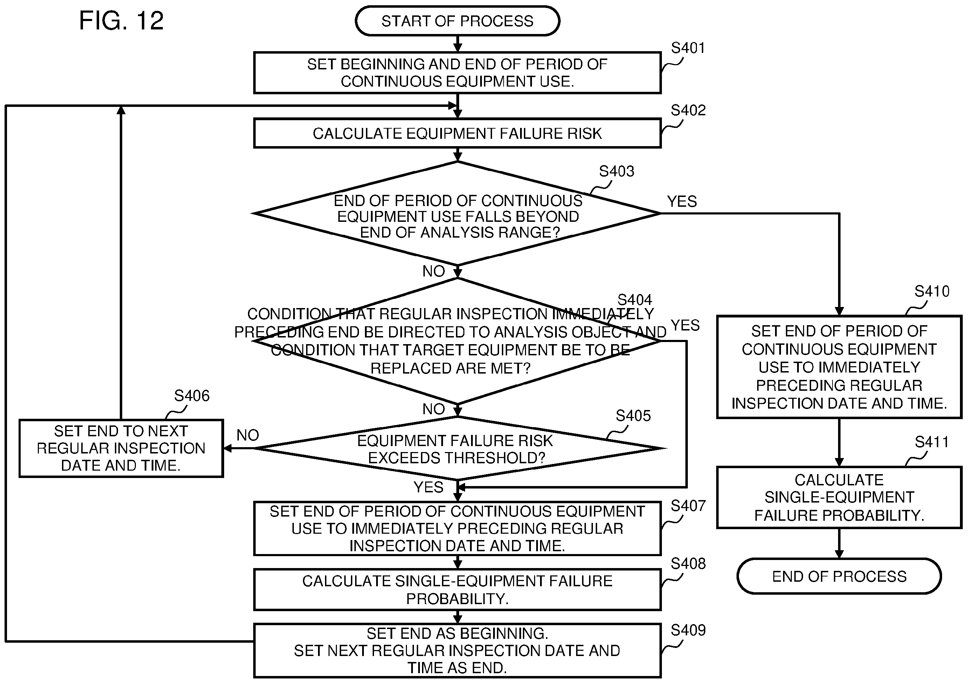

Figure 12 shows one example of a method for calculating a single-equipment failure probability of the replacement details pattern.

Steps 401 to 403 in Figure 12 are the same as steps 201 to 203 in Figure 8. Steps 405 to 411 in Figure 12 are the same as steps 204 to 210 in Figure 8. Thus, a description will be given below with a focus on step 404 different from Figure 8.

It is judged whether a regular inspection next to a regular inspection corresponding to an inspection number entered in the entry field 302 in Figure 3 is set as an end of a period of continuous equipment use and whether equipment as a calculation object is checkmarked in the replacement details 305 (step 404).

If the conditions in step 404 are met (YES in step 404), equipment replacement is performed (replacement is set to be conducted by the maintenance manager) regardless of a result of judging whether a threshold for an equipment failure risk is exceeded (step 405). The regular inspection entered in the entry field 302 is set as the end of the period of continuous equipment use.

The above-described details will be described taking Figure 9 as an example. If the regular inspection entered in the entry field 302 is the regular inspection (the (S+2)-th) denoted by reference numeral 908, and a checkmark is entered as target equipment replacement details entered in the replacement details 305, the end of the period of continuous equipment use is set to the regular inspection (the (S+3)-th) denoted by reference numeral 904. Replacement is performed at the regular inspection (the (S+2)-th) regardless of whether a calculated equipment failure risk exceeds a threshold. The regular inspection (the (S+2)-th) is set as the end of the period of continuous equipment use, and a single-equipment failure probability is output. Thus, if the conditions in step 404 are met, the flow advances to step 407.

On the other hand, if the conditions in step 404 are not met (NO in step 404), the flow advances to step 405.

Refer back to Figure 12. Processes other than that in step 404 are the same as in Figure 8. As described above, the failure probability simulation unit 105 calculates a single-equipment failure probability calculated in step 408 or step 411 as the single-equipment failure probability of the replacement details pattern.

Refer back to Figure 2. The equipment preservation decision support system 1 calculates a cumulative transport disorder risk of the replacement details pattern in a target trainset from calculated single-equipment failure probabilities of the replacement details pattern (step 107).

This is a process to be conducted by the risk and cost calculation unit 104 in Figure 1. That is, the risk and cost calculation unit 104 calculates a cumulative transport disorder risk in a case where equipment replacement is performed on the basis of the replacement details pattern entered in step 101. Note that the cumulative transport disorder risk can be calculated by the same method as in step 104 by replacement of the single-equipment failure probabilities of the current plan with the single-equipment failure probabilities of the replacement details pattern.

The equipment preservation decision support system 1 then calculates a maintenance cost of the replacement details pattern in a target trainset from the calculated single-equipment failure probabilities of the replacement details pattern (step 108). This is a process to be conducted by the risk and cost calculation unit 104 in Figure 1. That is, the risk and cost calculation unit 104 calculates a maintenance cost in a case where equipment replacement is performed on the basis of the replacement details pattern. Note that the maintenance cost can be calculated by the same method as in step 105 by replacement of the single-equipment failure probabilities of the current plan with the single-equipment failure probabilities of the replacement details pattern.

In the above-described manner, the equipment preservation decision support system 1 outputs, as a processing result, the transport disorder risk, the cumulative transport disorder risk, and the maintenance cost of each of the current plan and the replacement details pattern (step 109), and the process is completed. This is a process to be conducted by the result output unit 106 in Figure 1.

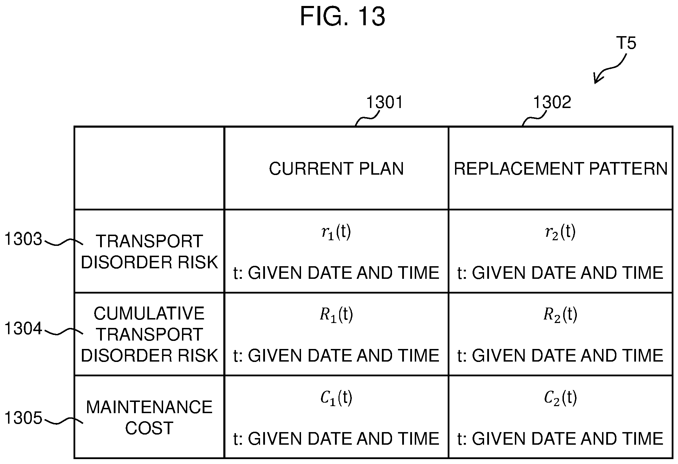

Figure 13 shows an example of a data structure representing the transport disorder risk, the cumulative transport disorder risk, and the maintenance cost of each of the current plan and the replacement details pattern.

In Figure 13, the data structure is represented by a table T5. This corresponds to the risk and cost output information 111 in Figure 1. A column 1301 indicates a transport disorder risk, a cumulative transport disorder risk, and a maintenance cost in a case where equipment replacement is performed on the current plan.

A column 1302 indicates a transport disorder risk, a cumulative transport disorder risk, and a maintenance cost in a case where equipment replacement is performed in the replacement pattern entered in step 101.

A row 1303 indicates functions of a transport disorder risk, a row 1304 indicates functions of a cumulative transport disorder risk, and a row 1305 indicates functions of a maintenance cost. These functions each use a date and time as an explanation variable.

In this manner, it is possible to know the transport disorder risk, the cumulative transport disorder risk, and the maintenance cost for each of the current plan and the replacement details pattern.

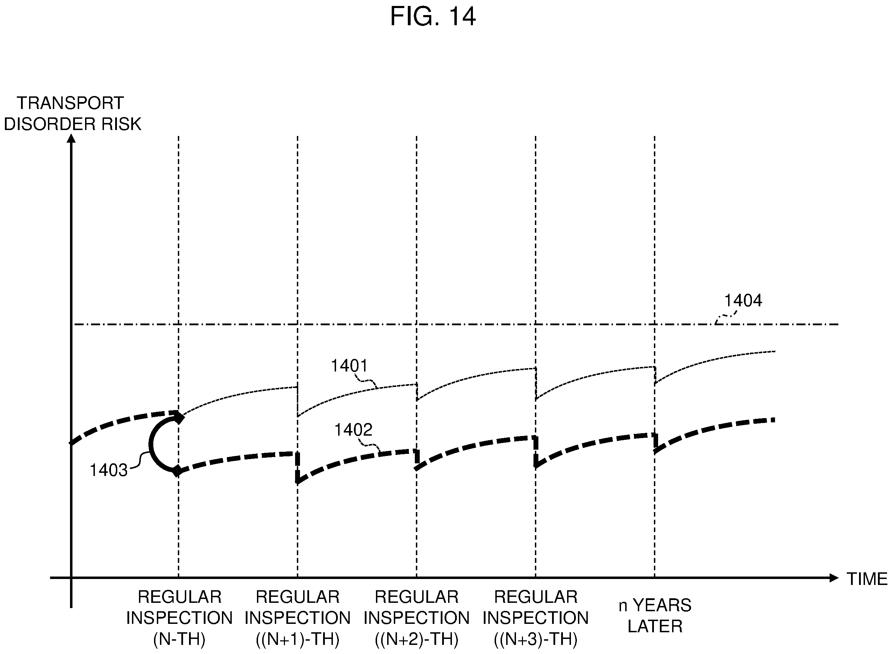

Figure 14 shows an output example of the respective transport disorder risks of the current plan and the replacement details pattern.

In Figure 14, a dotted line 1401 indicates the transport disorder risk of the current plan. A dotted line 1402 indicates the transport disorder risk of the replacement details pattern. Figure 14 shows that analysis of replacement details at a regular inspection (an N-th) has been conducted in the present embodiment.

A solid line 1403 indicates a displacement of the transport disorder risk caused by change of replacement details which makes the replacement details different from those of the current plan. The displacement indicates that pieces of equipment to be replaced have been increased as compared with the current plan in the present embodiment and means a reduction in the transport disorder risk at the regular inspection (the N-th). The regular inspection entered in the entry field 302 in Figure 3 corresponds to the regular inspection denoted by reference numeral 1403. A dashed line 1404 indicates a threshold for a transport disorder risk, and the threshold is assumed to be a reference value which should not be exceeded in maintenance operation. Although various setting methods are conceivable to set the threshold depending on the maintenance operation method, a given value may be adopted.

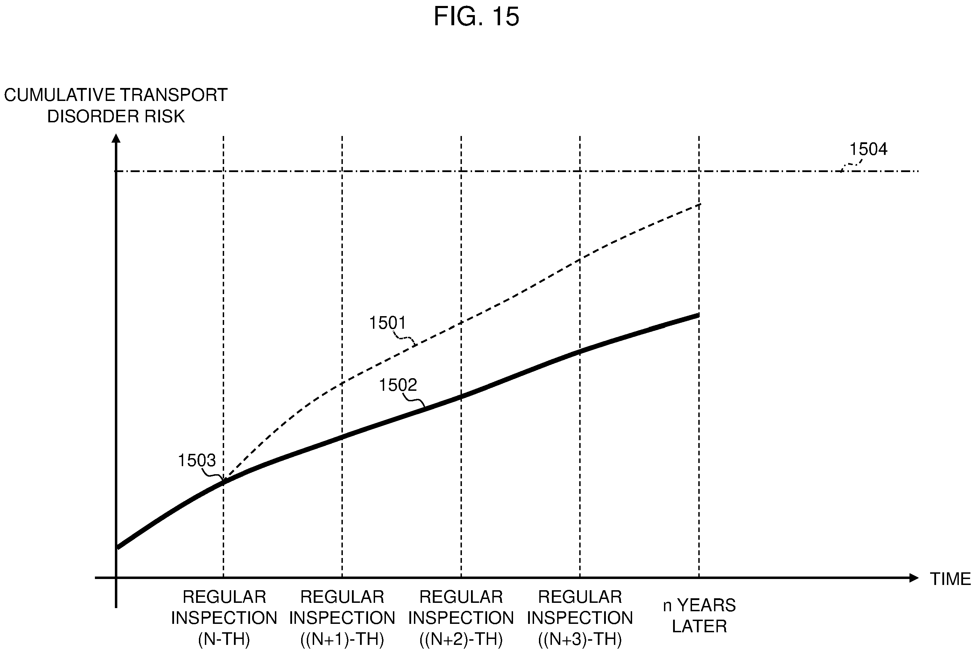

Figure 15 shows an output example of the respective cumulative transport disorder risks of the current plan and the replacement details pattern.

In Figure 15, a dotted line 1501 indicates the cumulative transport disorder risk of the current plan. A solid line 1502 indicates the cumulative transport disorder risk of the replacement details pattern. Figure 15 shows that analysis of replacement details at a regular inspection (an N-th) denoted by reference numeral 1503 has been conducted in the present embodiment.

A difference between the respective cumulative transport disorder risks of the current plan and the replacement details pattern due to change of replacement details is shown in Figure 15. The difference indicates that pieces of equipment to be replaced have been increased as compared with the current plan in the present embodiment and means a reduction in the cumulative transport disorder risk at the regular inspection (the N-th). The regular inspection entered in the entry field 302 in Figure 3 corresponds to the regular inspection denoted by reference numeral 1503. A dashed line 1504 indicates a threshold for a cumulative transport disorder risk, and the threshold is assumed to be a reference value which should not be exceeded in maintenance operation. Although various setting methods are conceivable to set the threshold depending on the maintenance operation method, a given value may be adopted.

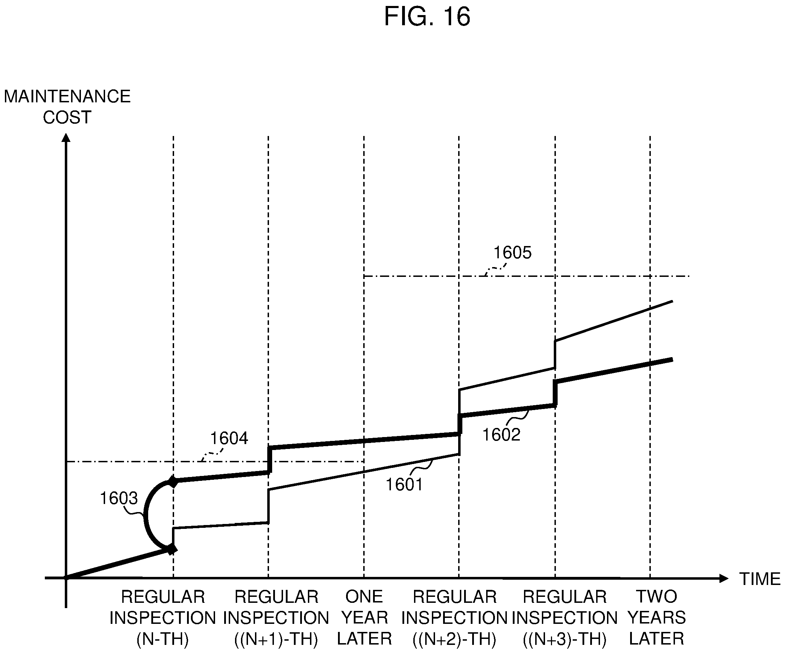

Figure 16 shows an output example of the respective maintenance costs of the current plan and the replacement details pattern.

In Figure 16, a solid line 1601 indicates the maintenance cost of the current plan. A solid line 1602 indicates the maintenance cost of the replacement details pattern. Figure 16 shows that analysis of replacement details at a regular inspection (an N-th) has been conducted in the present embodiment.

A solid line 1603 indicates a displacement of the maintenance cost caused by change of replacement details which makes the replacement details different from those of the current plan. The displacement indicates that pieces of equipment to be replaced have been increased as compared with the current plan in the present embodiment and means an increase in a replacement cost at the regular inspection (the N-th). The increase in the pieces of equipment to be replaced from the current plan reduces single-equipment failure probabilities, which leads to a reduction in an unplanned preservation cost. Thus, the maintenance cost of the replacement details pattern indicated by the solid line 1602 is reduced in slope. The regular inspection entered in the entry field 302 in Figure 3 corresponds to the regular inspection indicated by the solid line 1603. A dashed line 1604 indicates a threshold for a maintenance cost for the first year, and the threshold is assumed to be a reference value which should not be exceeded in maintenance operation. Various setting methods are conceivable to set the threshold depending on the maintenance operation method, and setting an annual maintenance budget is conceivable. A dashed line 1605 indicates a threshold for a maintenance cost for the second year, and the threshold is assumed to be a reference value which should not be exceeded in maintenance operation. To set the threshold, setting a maintenance budget for two years is conceivable. Note that, if an analysis range increases, the setting method is not limited to the above-described one, and thresholds are displayed for increased years.

The output examples shown in Figures 14 to 16 are displayed as analysis results on the output unit 117 (see Figure 1). This allows display of all of the three graphs and comparison of the three graphs on a same screen. Display information for these graphs is created by the processing unit 116 (see Figure 1). Thus, the processing unit 116 functions as result output means for outputting display information indicating risks, such as a transport disorder risk and a cumulative transport disorder risk, and a cost, such as a maintenance cost.

[Second Embodiment]

A second embodiment of an equipment preservation decision support system 1 will be described. In the second embodiment, the equipment preservation decision support system 1 searches for a case where a transport disorder risk, a cumulative transport disorder risk, and a maintenance cost when maintenance is conducted with changed equipment replacement details (when maintenance is conducted in a replacement details pattern) are appropriate. That is, the equipment preservation decision support system 1 searches for replacement details which reduce risks, such as a transport disorder risk and a cumulative transport disorder risk, and a maintenance cost. Desirably, the equipment preservation decision support system 1 searches for replacement details which minimize the risks and the maintenance cost.

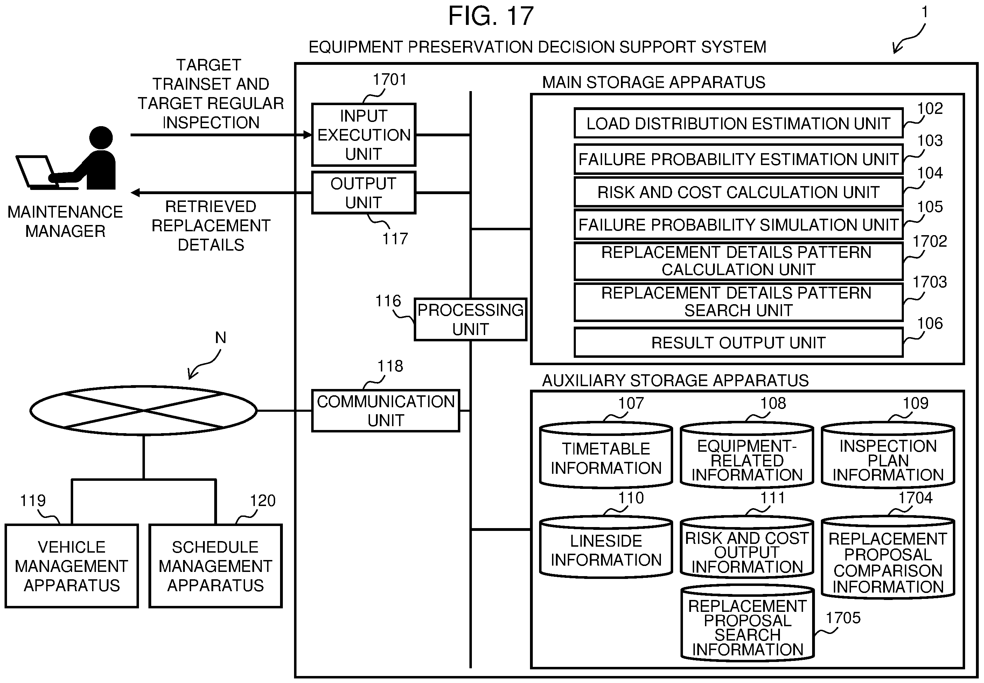

Figure 17 is a diagram showing an example of an overall configuration of the equipment preservation decision support system 1 according to the second embodiment.

A description will be given below with a focus on differences from the equipment preservation decision support system 1 according to the first embodiment shown in Figure 1.

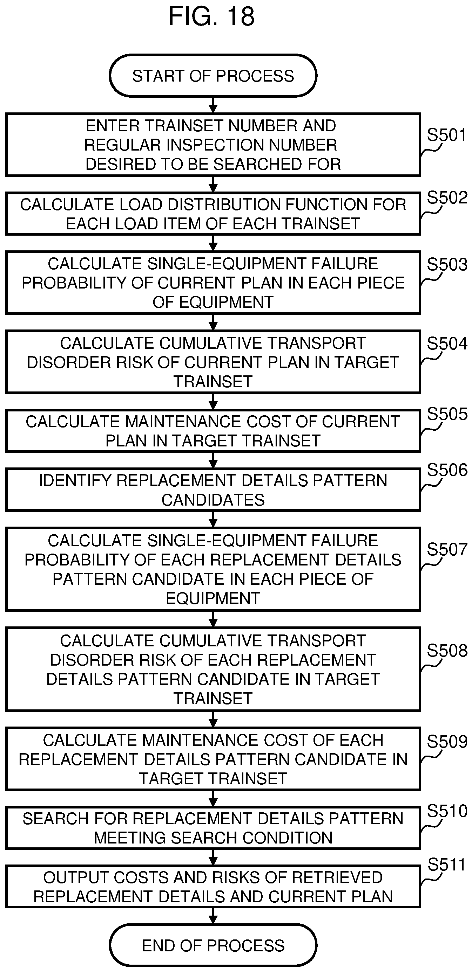

The equipment preservation decision support system 1 according to the second embodiment shown in Figure 17 further includes an input execution unit 1701, a replacement details pattern calculation unit 1702, a replacement details pattern search unit 1703, replacement proposal comparison information 1704, and replacement proposal search information 1705 as compared with the equipment preservation decision support system 1 according to the first embodiment shown in Figure 1. Differences between the equipment preservation decision support systems 1 will be described below with reference to Figure 18.

Figure 18 is a flowchart for explaining the action of the equipment preservation decision support system 1 according to the second embodiment.

A maintenance manager first enters a trainset number and a regular inspection number, replacement details for which are desired to be searched for (step 501). This corresponds to a process to be conducted by the input execution unit 1701 in Figure 17. In this embodiment, a specific example of a setting method will be described with reference to Figure 3.

The maintenance manager enters a trainset number desired to be analyzed in an entry field 301 on a dialog D1. The maintenance manager also enters a regular inspection number desired to be analyzed in an entry field 302. Note that entry of replacement details 305 is unnecessary in the present embodiment.

Steps 502 to 505 are the same as steps 102 to 105 in Figure 2.

The equipment preservation decision support system 1 extracts a replacement details pattern candidate (step 506). This corresponds to a process to be conducted by the replacement details pattern calculation unit 1702 in Figure 17. The replacement details pattern candidate represents a combination of choices of whether to replace each of pieces of equipment which do not necessarily require equipment replacement. As described above, if an equipment failure risk exceeds a threshold, replacement is required. However, even if the equipment failure risk does not exceed the threshold, replacement may be desirable due to, e.g., an unplanned preservation occurrence risk. Pieces of equipment which do not necessarily require replacement are identified, and a replacement details pattern candidate is calculated from the identified pieces of equipment.

Although various methods are conceivable as a method for identifying pieces of equipment which do not necessarily require replacement depending on the operation method, one example of a processing method will be described below.

First, a single-equipment failure probability is calculated in the same manner as in step 106 in Figure 2. At this time, equipment whose single-equipment failure probability exhibits an initial value at a date and time of a regular inspection indicates that the equipment requires replacement. Since a single-equipment failure probability predicts replacement performance only for equipment which requires replacement, equipment whose single-equipment failure probability does not have the initial value at the date and time of the regular inspection means that the equipment does not necessarily require replacement.

The foregoing description will be described with reference to Figure 7. If a single-equipment failure probability is displaced to an initial value, like the regular inspection (the (N+2)-th) denoted by reference numeral 702 or the regular inspection (the (N+6)-th) denoted by reference numeral 703, equipment replacement is required. Thus, in such a case, replacement performance at a regular inspection date and time is predicted. On the other hand, regular inspections other than such a case indicate that equipment replacement is not necessarily required.

On the basis of the above description, a replacement details pattern candidate is extracted. That is, a combination of choices of whether to replace each of pieces of equipment which do not necessarily require equipment replacement is extracted in the above-described manner. A method for calculating a combination may be a common calculation method.

A single-equipment failure probability of each piece of equipment in each replacement details pattern candidate is calculated (step 507). A specific calculation method is the same as in step 106 in Figure 2. If there are a plurality of replacement details pattern candidates, a single-equipment failure probability of each piece of equipment in each replacement details pattern is calculated. This corresponds to a process to be conducted by the failure probability simulation unit 105 in Figure 17.

A cumulative transport disorder risk of each replacement details pattern candidate in a target trainset is calculated (step 508). A specific calculation method is the same as in step 107. If there are a plurality of replacement details pattern candidates, a cumulative transport disorder risk in each replacement details pattern is calculated. This corresponds to a process to be conducted by the risk and cost calculation unit 104 in Figure 17.

A maintenance cost of each replacement details pattern candidate in the target trainset is calculated (step 509). A specific calculation method is the same as in step 108. If there are a plurality of replacement details pattern candidates, a maintenance cost in each replacement details pattern is calculated. This corresponds to a process to be conducted by the risk and cost calculation unit 104 in Figure 17.

A replacement details pattern which meets a search condition is searched for among the replacement details pattern candidates (step 510). This corresponds to a process to be conducted by the replacement details pattern search unit 1703 in Figure 17. The replacement details pattern search unit 1703 functions as a search unit which searches for a case which minimizes a risk and a cost among the replacement details pattern candidates.

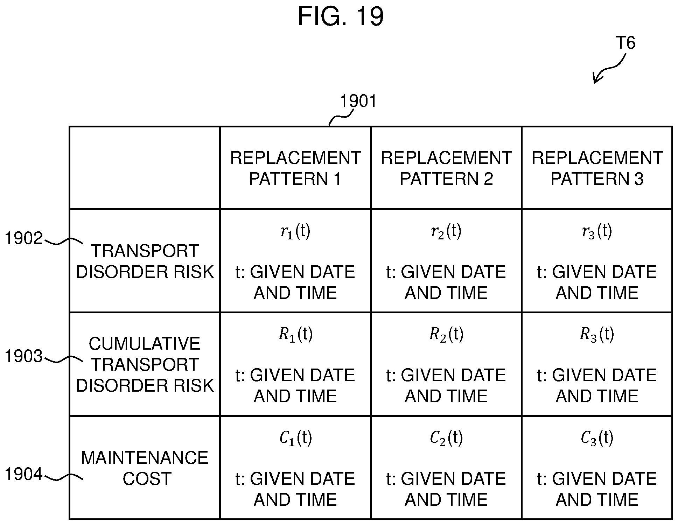

Figure 19 shows an example of a data structure representing a transport disorder risk, a cumulative transport disorder risk, and a maintenance cost of each replacement details pattern candidate. This corresponds to the replacement proposal comparison information 1704 in Figure 17. In Figure 19, the data structure is represented by a table T6.

For example, a column 1901 indicates, as one of replacement details pattern candidates, a transport disorder risk, a cumulative transport disorder risk, and a maintenance cost of replacement pattern 1. The other columns indicate, as the other replacement details pattern candidates, transport disorder risks, cumulative transport disorder risks, and maintenance costs of replacement pattern 2 and replacement pattern 3.

A row 1902 indicates functions of a transport disorder risk. A row 1903 indicates functions of a cumulative transport disorder risk. A row 1904 indicates functions of a maintenance cost. These functions each use a date and time as an explanation variable. In this manner, it is possible to know the transport disorder risk, the cumulative transport disorder risk, and the maintenance cost of each replacement details pattern candidate.

Among replacement details pattern candidates, an optimum replacement details pattern is searched for. Although various methods are conceivable to search for an optimum replacement details pattern depending on the maintenance operation, one example of a calculation method will be illustrated below.

A replacement details pattern in which a maximum value of a transport disorder risk is lower than a threshold for the transport disorder risk, a maintenance cost is lower than a threshold, and the sum of a cumulative transport disorder risk and the maintenance cost is the smallest is regarded as optimum replacement details.

First, a maximum value of a transport disorder risk, a cumulative transport disorder risk, a maintenance cost, and the sum of the cumulative transport disorder risk and the maintenance cost are calculated. Although various calculation methods are conceivable, one example of a calculation method will be illustrated below. These can be calculated by Expression 8 below.

[Expression 8]

$$\text{maximum value of transport disorder risk} = \text{MAX } r_m(t)$$

$$(\text{in a range of } 0 < t \leq n)$$

$$\text{cumulative transport disorder risk} = R_m(n)$$

$$\text{maintenance cost} = C_m(n)$$

$$\text{sum of cumulative transport disorder risk and}$$

$$\text{maintenance cost} = R_m(n) + C_m(n) \qquad (8)$$

In Expression 8, $r_m(t)$ is a transport disorder risk in a given replacement pattern at a date and time t, $R_m(t)$ is a cumulative transport disorder risk in the given replacement pattern at the date and time t, $C_m(n)$ is a maintenance cost in the given replacement pattern at the date and time t, and n is a given time point.

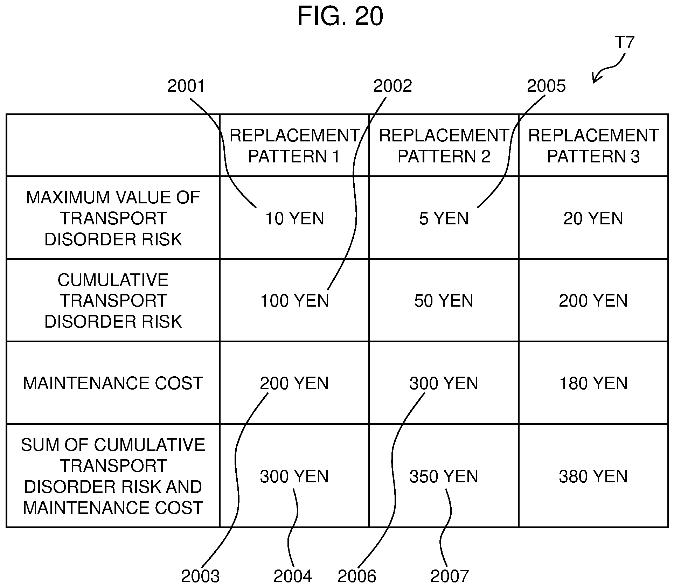

Figure 20 shows an example of a data structure representing a maximum value of a transport disorder risk, a cumulative transport disorder risk, a maintenance cost, and the sum of the cumulative transport disorder risk and the maintenance cost. This corresponds to the replacement proposal search information 1705 in Figure 17. In Figure 20, the data structure is represented by a table T7.

A field 2001 indicates a maximum value of the transport disorder risk in replacement pattern 1. A field 2002 indicates the cumulative transport disorder risk in replacement pattern 1. A field 2003 indicates the maintenance cost in replacement pattern 1. A field 2004 indicates the sum of the cumulative transport disorder risk and the maintenance cost in replacement pattern 1.

A field 2005 indicates a maximum value of the transport disorder risk in replacement pattern 2. A field 2006 indicates the maintenance cost in replacement pattern 2. A field 2007 indicates the sum of the cumulative transport disorder risk and the maintenance cost in replacement pattern 21.

Among the replacement details patterns, an optimum replacement details pattern is searched for on the basis of a maximum value of a transport disorder risk, a cumulative transport disorder risk, and a maintenance cost. A specific search method will be described with reference to Figure 20. If a threshold for a transport disorder risk is 15 yen, the maximum value of the transport disorder risk of replacement pattern 1 shown in the field 2001 and the maximum value of the transport disorder risk of replacement pattern 2 shown in the field 2005 are smaller than the threshold. For this reason, replacement pattern 1 and replacement pattern 2 meet the condition that a maximum value of a transport disorder risk be smaller than a threshold.

If a threshold for a maintenance cost is 400 yen, the maintenance cost of replacement pattern 1 shown in the field 2003 and the maintenance cost of replacement pattern 2 shown in the field 2006 are smaller than the threshold. For this reason, replacement pattern 1 and replacement pattern 2 meet the condition that a maximum value of a maintenance cost be smaller than a threshold.

The sum of the cumulative transport disorder risk and the maintenance cost of replacement pattern 1 shown in the field 2004 is compared with the sum of the cumulative transport disorder risk and the maintenance cost of replacement pattern 2 shown in the field 2007. Since a result of the comparison shows that the sum of the cumulative transport disorder risk and the maintenance cost of replacement pattern 1 shown in the field 2007 is the smallest, replacement pattern 1 is a retrieved solution.

Refer back to Figure 18. Finally, the transport disorder risk, the cumulative transport disorder risk, and the maintenance cost of each of the current plan and the retrieved replacement details pattern are output (step 511), and the process is completed.

This corresponds to a process to be conducted by the result output unit 106 in Figure 17. Note that the same processing and the same output example as in step 109 are obtained by replacing the replacement details pattern with the retrieved replacement details pattern.

[Third Embodiment]

A third embodiment of an equipment preservation decision support system 1 will be described. The third embodiment illustrates an example where the present embodiments are applied not only to a mobile object but also to a facility related to the mobile object. Examples of a facility related to a mobile object include a runway and the like for an airplane, an expressway, a tunnel, a bridge, and the like for an automobile, and ground equipment, such as a track, an overhead line, a switch, and the like for a railroad. Note that a case where railroad ground equipment is an object will be described in the present embodiment. Differences of a configuration and processing in a case where railroad ground equipment is handled will be described below.

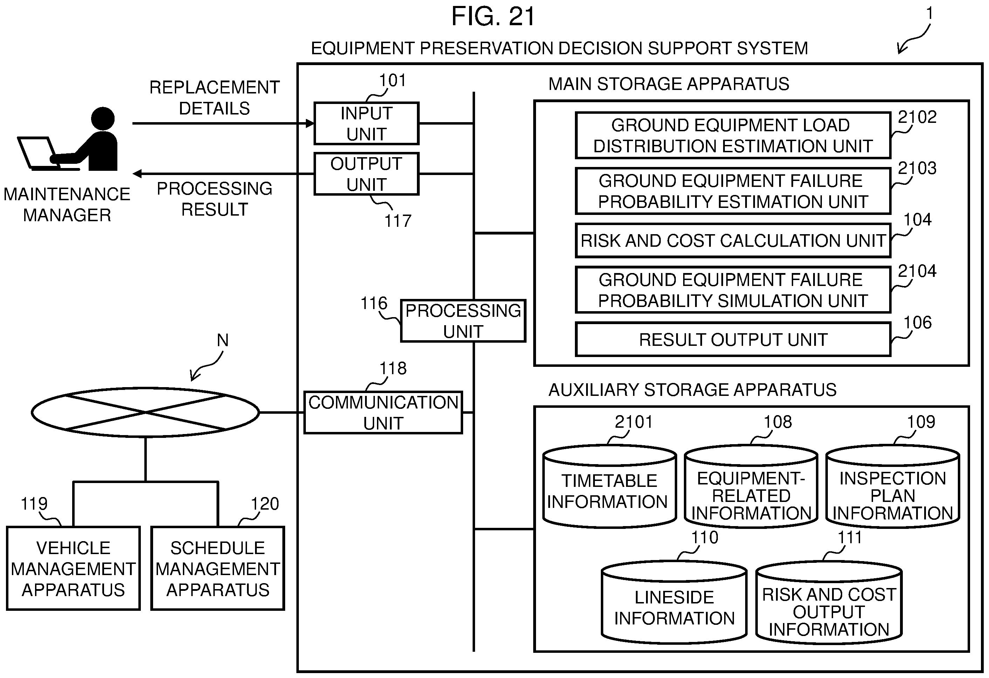

Figure 21 is a diagram showing an example of an overall configuration of the equipment preservation decision support system 1 according to the third embodiment.

A description will be given below with a focus on differences from the equipment preservation decision support systems 1 according to the first embodiment shown in Figure 1 and the second embodiment shown in Figure 17.

The equipment preservation decision support system 1 of the second embodiment shown in Figure 21 includes travel and passage information 2101, a ground equipment load distribution estimation unit 2102, a ground equipment failure probability estimation unit 2103, and a ground equipment failure probability simulation unit 2104 as compared with the equipment preservation decision support systems 1 in Figures 1 and 17.

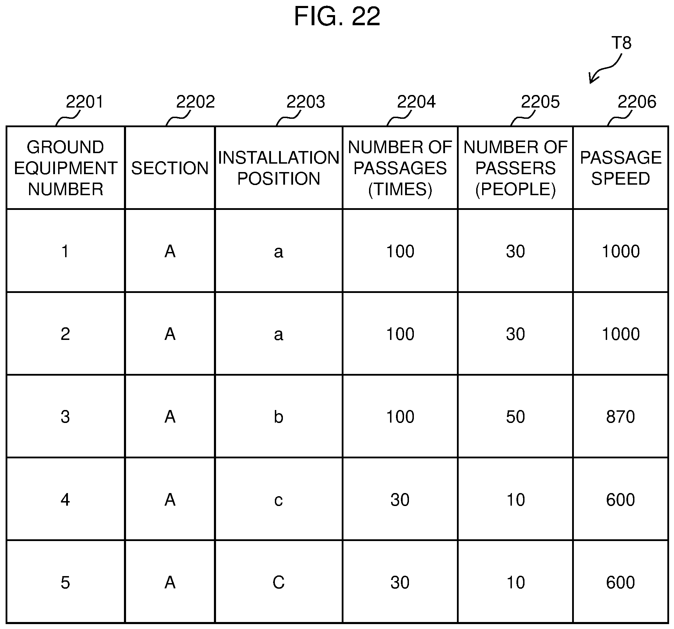

Figure 22 shows a data example representing load items which affect an equipment failure in railroad ground equipment. Figure 22 shows load items as information of trains which pass through pieces of ground equipment on one given day.

This corresponds to the travel and passage information 2101 in Figure 21. A column 2201 indicates a ground equipment number as a number of ground equipment. A column 2202 indicates a section in which each piece of ground equipment is installed. A column 2203 indicates a detailed installation position where each piece of ground equipment is installed.

A column 2204 indicates the number of passages as the number of times that trains pass through each piece of ground equipment per day. A column 2205 indicates the number of passers as the number of riders which are on the trains passing through each piece of ground equipment per day. A column 2206 indicates a passage speed of trains passing through each piece of ground equipment.

Although several methods are available to set these pieces of information, the setting can be implemented by receiving planned schedule information, travel track record information, and the like from, e.g., a schedule management apparatus 120 in Figure 1. Note that a load item other than the above-described ones may be added as long as the load item is a load which affects an equipment failure.

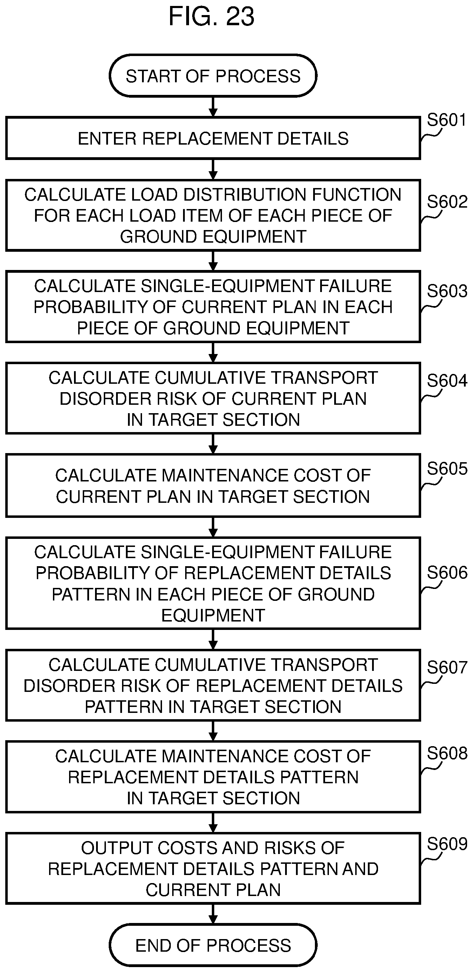

Refer back to Figure 21. Differences of the ground equipment load distribution estimation unit 2102, the ground equipment failure probability estimation unit 2103, and the ground equipment failure probability simulation unit 2104 will be described with reference to Figure 23.

Figure 23 is a flowchart for explaining the action of the equipment preservation decision support system 1 according to the third embodiment.

Step 601 is the same as step 101 in Figure 2.

The equipment preservation decision support system 1 then calculates a load distribution function for each load item of each piece of ground equipment (step 602).

Since a plurality of tracks may be installed on a single line or in a single section, the numbers of passages or the like may be different. As for railroad ground equipment, it is necessary to calculate a single-equipment failure probability of each piece of ground equipment using a load distribution function for the ground equipment as input information. Although load distribution functions are calculated for each target trainset in step 102 in Figure 2, load distribution functions are calculated for each piece of ground equipment installed in a target section in step 602 in Figure 23. A specific calculation method is the same as in step 102. Step 602 corresponds to a process to be conducted by the ground equipment load distribution estimation unit 2102 in Figure 21.

The equipment preservation decision support system 1 calculates a single-equipment failure probability of a current plan in each piece of ground equipment using load distribution functions for target ground equipment as input information (step 603).

Although a single-equipment failure probability is calculated using load distribution functions for each trainset constituting railroad vehicles as input information in step 103 in Figure 2, load distribution functions for each piece of ground equipment are used as input information in step 603. A single-equipment failure probability of each piece of ground equipment is calculated. A specific calculation method is the same as in step 103. Step 603 corresponds to a process to be conducted by the ground equipment failure probability estimation unit 2103 in Figure 21.

A cumulative transport disorder risk of the current plan in a target section is calculated (step 604). A specific calculation method is the same as in step 104 in Figure 2. This corresponds to a process to be conducted by a risk and cost calculation unit 104 in Figure 21.

A maintenance cost of the current plan in the target section is then calculated using the single-equipment failure probabilities of the current plan as input information (step 605). A specific calculation method is the same as in step 205 in Figure 2. This corresponds to a process to be conducted by the risk and cost calculation unit 104 in Figure 21.

The equipment preservation decision support system 1 uses load distribution functions for target ground equipment and a replacement details pattern as input information to calculate a single-equipment failure probability of the replacement details pattern (step 606). Although a single-equipment failure probability is calculated using load distribution functions for each trainset constituting railroad vehicles as input information in step 106 in Figure 2, load distribution functions for each piece of ground equipment is used as input information in step 606. A single-equipment failure probability of each piece of ground equipment is calculated. A specific calculation method is the same as in step 106. Step 606 corresponds to a process to be conducted by the ground equipment failure probability simulation unit 2104 in Figure 21.

Steps 607 to 609 which are subsequent processes are almost the same as steps 107 to 109 in Figure 2. That is, the present embodiment can support a case where railroad ground equipment is handled by replacing a trainset with a section. A trainset is a collection of pieces of equipment. A failure in even one piece of equipment largely reduces availability of the trainset to reduce railroad service availability. The same applies to railroad ground equipment. A plurality of pieces of ground equipment are installed in one section. A failure in even one piece of ground equipment largely reduces availability of the section to reduce the railroad service availability. Railroad vehicles are inspected on a per-trainset basis, and pieces of railroad ground equipment are inspected on a per-section basis. The above-described modes can also be applied to railroad ground equipment by replacing a trainset with a section.

[Fourth Embodiment]

A fourth embodiment of an equipment preservation decision support system 1 will be described. In the fourth embodiment, a method for utilization at a site of maintenance of a railroad vehicle will be described using the equipment preservation decision support systems 1 described above.

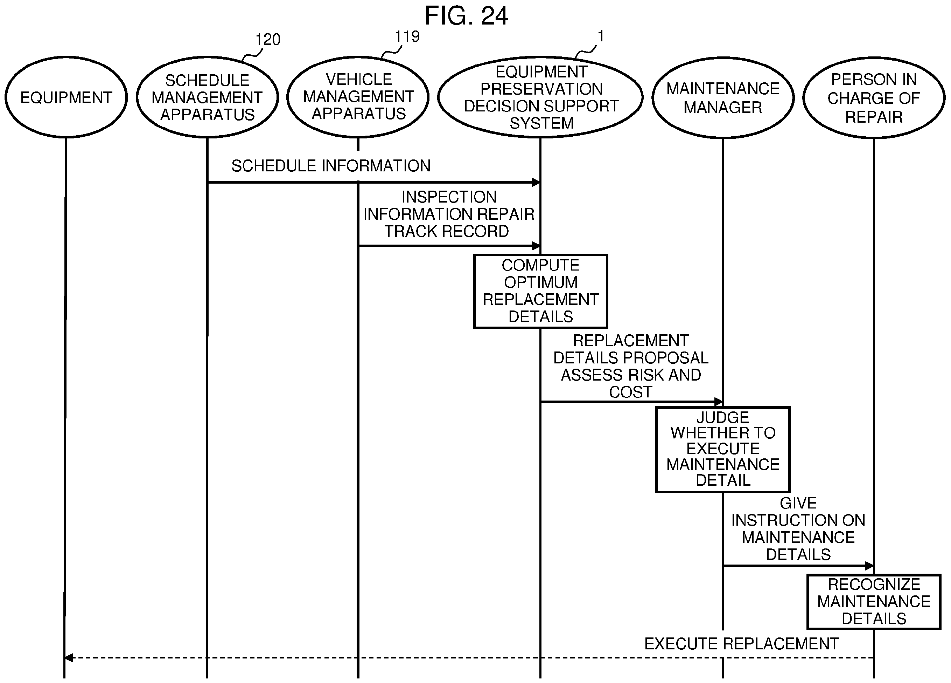

Figure 24 shows an activity chart at the site of maintenance of a railroad vehicle.

First, schedule planning information is sent from a schedule management apparatus 120 (see Figure 1), inspection plan information is sent from a vehicle management apparatus 119, and the pieces of information are stored in the equipment preservation decision support system 1. The equipment preservation decision support system 1 can be made identical to the equipment preservation decision support system 1 in Figure 1, 17, or 21.

A maintenance manager then enters analysis details (e.g., a target trainset and a target inspection), and the equipment preservation decision support system 1 outputs a transport disorder risk, a cumulative transport disorder risk, and a maintenance cost on the basis of the input information. A computation processing flow is the same as the processing flows in Figures 2, 18, and 23.

The maintenance manager refers to a processing result, confirms the transport disorder risk, the cumulative transport disorder risk, and the maintenance cost to be improved, and makes a judgment about details of equipment replacement. The maintenance manager gives an instruction for replacement to a person in charge of repair of each piece of equipment on the basis of the replacement details, about which the judgment is made by the maintenance manager, and the person in charge of repair performs replacement on the basis of the instruction.

[Fifth Embodiment]

A fifth embodiment of an equipment preservation decision support system 1 will be described. In the fifth embodiment, a case where a maintenance object in the equipment preservation decision support systems 1 described above is a non-railroad-related thing will be described.

A description will be given here taking a chemical plant as an example. In the case of the chemical plant, a maintenance object is an instrument constituting the chemical plant. Specifically, the instrument is, for example, a reaction tank. For example, a chemical reaction-based treatment is conducted in the reaction tank. The chemical reaction-based treatment is not particularly limited. For example, synthesis of a chemical may be adopted as the chemical reaction-based treatment. Also, desalination treatment which fills the reaction tank with ion-exchange resin and desalinates raw water may be adopted as the chemical reaction-based treatment. Additionally, chlorine removal treatment which fills the reaction tank with activated carbon and dechlorinates tap water may be adopted as the chemical reaction-based treatment. Further, degradative treatment which fills the reaction tank with microorganisms and degrades an organic substance by the microorganisms may be adopted as the chemical reaction-based treatment. A chemical to be prepared by the treatment is, for example, a dye, a medicine, or pure water. The instrument is not limited to the reaction tank, and is not particularly limited as long as the instrument is an instrument to be used in a chemical plant, such as a firing apparatus which conducts firing (e.g., an electric furnace or a gas furnace), a classification apparatus which conducts classification by, e.g., screening, a grinding apparatus which conducts grinding, a drying apparatus which conducts drying, a degassing apparatus which removes gas dissolved in liquid, a solution sending apparatus which is composed of piping which transports liquid, a pump, an on-off valve, and the like, or a control apparatus which controls the above-described apparatuses.

A drug, a unit, a part, and the like which constitute the above-described instrument can be set as equipment constituting the maintenance object. For example, ion-exchange resin, activated carbon, an absorbent, a catalyst, or the like corresponds to the drug. Examples of the unit include an agitation unit which agitates liquid in the reaction tank, a heater unit which adds heat, a pump unit which adjusts pressure, and a pH adjustment unit which conducts pH adjustment.

A load applied to each instrument can be prescribed by, for example, a chemical reaction time, a chemical reaction amount, a flow rate of liquid which circulates through the instrument, the concentration of a solute, a reaction temperature, a pH, and the type of atmosphere gas. With these loads, load distribution functions, accumulated load amount functions, a single-equipment failure rate, and the like of equipment constituting each instrument can be obtained.

A failure occurrence probability can be calculated as a probability of each instrument failing to be run due to deterioration of a drug or a probability of a failure occurring in each instrument.

A risk can be regarded as an expected value of an economic loss caused when each instrument fails to be run.

A cost required for maintenance can be regarded as a cost required for equipment replacement. That is, the cost can be regarded as a cost required for drug replacement and unit and part replacement.

Note that a regular inspection called a regular repair or the like is present for the chemical plant, and replacement, repair, and the like of equipment are conducted at the regular inspection as in the above-described case of a railroad trainset.

<Description of Effects>

The equipment preservation decision support system 1 estimates a single-equipment failure for each piece of equipment and estimates risks, such as a transport disorder risk and a cumulative transport disorder risk, and a cost, such as a maintenance cost, incurred by an equipment failure for each maintenance object. The equipment preservation decision support system 1 estimates the risks and the cost for each of a case where equipment maintenance is conducted as scheduled on a basis determined (with details defined by maintenance performance) and a case where details of equipment maintenance are changed. The output unit 117 makes a comparison between the case where equipment maintenance is conducted as scheduled on the basis determined (with the details defined by maintenance performance) and the case where the details of equipment maintenance are changed and displays the risks and the cost. The risks and the cost are obtained for a case where maintenance which performs estimated equipment replacement is conducted on a maintenance object.

With the above-described configuration, in the first embodiment, replacement details when a maintenance manager makes entries and changes details of equipment maintenance can be quantitatively assessed. At the time of maintenance of a maintenance object, information for conducting exchange, mending, and the like at a more suitable timing for each piece of equipment can be obtained. As a result, the maintenance manager can devise a more suitable maintenance plan which balances risk and cost. A better judgment about replacement and repair is facilitated for the maintenance manager to achieve a cost reduction while reducing risks. This in turn improves incomings and outgoings of a holder of the maintenance object, such as a railroad company.

At the time of the display, the output unit 117 further displays upper limits for the risks and cost. This allows enhancement of convenience.

In the second embodiment, a case which minimizes risks and a cost is searched for among replacement details pattern candidates. With this search, a replacement details pattern whose risks and cost are reduced is output in a so-called automatic manner. This allows alleviation of a burden on the maintenance manager.

In the first and second embodiments, a mobile object, such as a railroad trainset, is set as a maintenance object. In this case, safety of the mobile object is especially required. The present approach is particularly useful in devising a more safety-conscious maintenance plan.

In the first and second embodiments, a railroad trainset has been described as a maintenance object. In the third embodiment, the present embodiments can be applied to a facility related to a mobile object, such as railroad ground equipment, and the above-described effects can be exerted.

Note that, in the first to third embodiments, a mobile object of, e.g., a railroad and a facility related to a facility related to the mobile object are set as maintenance objects and load items are obtained on the basis of planned schedule information which is a running plan for the mobile object. This enhances accuracy of a load distribution function.

In the fourth embodiment, a maintenance manager can give an instruction for more suitable maintenance to a maintenance site. The maintenance manager can present, to the maintenance site, a prediction of risks and a cost and a reduction effect for each set of replacement details.

In the fifth embodiment, the present embodiments can be applied to even a case where not only a mobile object and a facility related to the mobile object but also a thing other than those are set as maintenance objects, and the above-described effects can be exerted.

<Description of Maintenance assistance method>

Processing to be conducted by the equipment preservation decision support system 1 described with reference to the flowchart in Figure 2 and the like can be viewed as a maintenance assistance method which estimates, for each of pieces of equipment constituting a maintenance object, a load which is applied to the equipment in accordance with time, predicts, on the basis of the estimated load, a failure occurrence probability which is a probability of occurrence of a failure in the equipment in accordance with time, estimates a risk when operation of the maintenance object is hindered on the basis of the predicted failure occurrence probability, and estimates a cost required for maintenance of the maintenance object on the basis of the failure occurrence probability.

<Description of Program>

Processing to be conducted by the equipment preservation decision support systems 1 according to the present embodiments described above is implemented by cooperation between software and hardware resources. That is, a processor, such as a CPU, provided in each equipment preservation decision support system 1 executes a program which implements functions of the equipment preservation decision support system 1 to implement the functions.

Thus, the processing to be conducted by the equipment preservation decision support systems 1 in the present embodiments can also be viewed as a program for causing a computer to implement a load estimation function of estimating, for each of pieces of equipment constituting a maintenance object, a load which is applied to the equipment in accordance with time, a failure prediction function of predicting, on the basis of the estimated load, a failure occurrence probability which is a probability of occurrence of a failure in the equipment in accordance with time, a risk estimation function of estimating a risk when operation of the maintenance object is hindered on the basis of the predicted failure occurrence probability, and a cost estimation function of estimating a cost required for maintenance of the maintenance object on the basis of the failure occurrence probability.

Note that the program that implements the present embodiments can be provided not only by communication means but also by being stored in a recording medium, such as a CD-ROM.

The present embodiments have been described above. The technical scope of the present invention is not limited to those of the embodiments. It is apparent from the description of the claims that embodiments obtained by making various alterations or improvements to the embodiments are also included in the technical scope of the present invention.

Reference Signs List

1 equipment preservation decision support system, 101 input unit, 102 load distribution estimation unit, 103 failure probability estimation unit, 104 risk and cost calculation unit, 105 failure probability simulation unit, 106 result output unit, 107 travel plan information, 108 equipment-related information, 109 inspection plan information, 110 lineside information, 111 risk and cost output information

**Claims**

1. A maintenance assistance device comprising:

   load estimation means for estimating at least one of a load which is applied to a maintenance object in accordance with time and a load which is applied to equipment constituting the maintenance object in accordance with time;
   failure prediction means for predicting, on the basis of the estimated load, a failure occurrence probability which is a probability of occurrence of a failure in the equipment in accordance with time;
   risk estimation means for estimating a risk when operation of the maintenance object is hindered on the basis of the predicted failure occurrence probability; and
cost estimation means for estimating a cost required for maintenance of the maintenance object on the basis of the failure occurrence probability.

2.  The maintenance assistance device according to claim 1, wherein
the risk and the cost are obtained for the maintenance object as of an estimated due date for maintenance performance.

3.  The maintenance assistance device according to claim 2, wherein
the risk and the cost are estimated for each of a case where maintenance of the equipment is conducted with details defined for the maintenance performance and a case where maintenance details for the equipment are changed.

4.  The maintenance assistance device according to claim 3, further comprising

result output means for outputting display information indicating the risk and the cost with respect to time, wherein the result output means makes a comparison between the case where maintenance of the equipment is conducted with the details defined for the maintenance performance and the case where the maintenance details for the equipment are changed and displays the risk and the cost.

5.  The maintenance assistance device according to claim 4, wherein
the result output means further displays respective upper limits for the risk and the cost.

6.  The maintenance assistance device according to claim 1, further comprising
a search unit which searches for a case which minimizes the risk and the cost when the maintenance details for the equipment are changed.

7.  The maintenance assistance device according to claim 1, wherein
the load estimation means obtains the load as a load distribution function indicating a distribution of a load amount per unit time in the maintenance object for a load item which is an item affecting a failure of the equipment.

8.  The maintenance assistance device according to claim 7, wherein

the maintenance object is at least one of a mobile object and a facility related to the mobile object, and
the load estimation means obtains the load distribution item on the basis of planned schedule information which is a plan of running of the mobile object.

9.  The maintenance assistance device according to claim 1, wherein
the failure prediction means predicts the failure occurrence probability on the basis of an amount of load accumulated which is obtained based on the load.

10. The maintenance assistance device according to claim 9, wherein
the failure prediction means obtains the amount of load accumulated as an accumulated load amount function indicating an amount of load at a given time point.

11. The maintenance assistance device according to claim 9, wherein
the failure occurrence probability returns to an initial value set in advance for one piece of equipment when the one piece of equipment is maintained.

12. The maintenance assistance device according to claim 1, wherein

an upper limit for an equipment failure risk which is a degree of influence degree of an equipment failure is defined, and
the failure prediction means estimates, on the basis of the upper limit, a due date for maintenance performance when the maintenance of the equipment is to be conducted.

13. The maintenance assistance device according to claim 12, wherein
the failure prediction means obtains the equipment failure risk using a risk influence degree representing influence of a failure of the equipment together with the failure occurrence probability.

**14.** The maintenance assistance device according to claim 1, wherein
the risk estimation means obtains the risk as a loss caused when the operation of the maintenance object is hindered.

**15.** The maintenance assistance device according to claim 1, wherein
the cost estimation means regards, as the cost, a sum of an unplanned preservation cost which is an expense required for unplanned maintenance, a replacement cost which is a total sum of life cycle costs of the equipment, and an inspection cost which is an expense required for a regular inspection for the maintenance object.

**16.** The maintenance assistance device according to claim 1, wherein
the maintenance object is at least one of a mobile object and a facility related to the mobile object.

**17.** The maintenance assistance device according to claim 16, wherein
the mobile object is a trainset of railroad vehicles, and the risk and the cost are obtained for each of the trainset.

**18.** The maintenance assistance device according to claim 16, wherein
the facility related to the mobile object is railroad ground equipment.

**19.** A maintenance assistance device comprising:

failure prediction means for predicting a failure occurrence probability which is a probability of occurrence of a failure in equipment constituting a maintenance object in accordance with time;
risk estimation means for estimating a risk when operation of the maintenance object is hindered on the basis of the predicted failure occurrence probability;
cost estimation means for estimating a cost required for maintenance of the maintenance object on the basis of the failure occurrence probability; and
result output means for outputting display information indicating the risk and the cost with respect to time,
wherein the result output means makes a comparison between a case where maintenance is conducted as scheduled on a basis or in line with a plan determined in advance and a case where maintenance details for the equipment are changed and displays the risk and the cost.

**20.** A maintenance assistance method comprising:

estimating at least one of a load which is applied to a maintenance object in accordance with time and a load which is applied to equipment constituting the maintenance object in accordance with time;
predicting, on the basis of the estimated load, a failure occurrence probability which is a probability of occurrence of a failure in the equipment in accordance with time;
estimating a risk when operation of the maintenance object is hindered on the basis of the predicted failure occurrence probability; and
estimating a cost required for maintenance of the maintenance object on the basis of the failure occurrence probability.

**21.** A program for causing a computer to implement:

a load estimation function of estimating at least one of a load which is applied to a maintenance object in accordance with time and a load which is applied to equipment constituting the maintenance object in accordance with time;
a failure prediction function of predicting, on the basis of the estimated load, a failure occurrence probability which is a probability of occurrence of a failure in the equipment in accordance with time;
a risk estimation function of estimating a risk when operation of the maintenance object is hindered on the basis of the predicted failure occurrence probability; and
a cost estimation function of estimating a cost required for maintenance of the maintenance object on the basis of the failure occurrence probability.

# FIG. 1

## EQUIPMENT PRESERVATION DECISION SUPPORT SYSTEM

MAINTENANCE MANAGER

REPLACEMENT DETAILS → INPUT UNIT 101

PROCESSING RESULT ← OUTPUT UNIT 117

**MAIN STORAGE APPARATUS**

- LOAD DISTRIBUTION ESTIMATION UNIT 102
- FAILURE PROBABILITY ESTIMATION UNIT 103
- RISK AND COST CALCULATION UNIT 104
- FAILURE PROBABILITY SIMULATION UNIT 105
- RESULT OUTPUT UNIT 106

PROCESSING UNIT 116

COMMUNICATION UNIT 118

N

**AUXILIARY STORAGE APPARATUS**

- TIMETABLE INFORMATION 107
- EQUIPMENT-RELATED INFORMATION 108
- INSPECTION PLAN INFORMATION 109
- LINESIDE INFORMATION 110
- RISK AND COST OUTPUT INFORMATION 111

VEHICLE MANAGEMENT APPARATUS 119

SCHEDULE MANAGEMENT APPARATUS 120

1

EP 4 510 051 A1

# FIG. 2

START OF PROCESS

ENTER REPLACEMENT DETAILS — S101

CALCULATE LOAD DISTRIBUTION FUNCTION FOR EACH LOAD ITEM OF EACH TRAINSET — S102

CALCULATE SINGLE-EQUIPMENT FAILURE PROBABILITY OF CURRENT PLAN IN EACH PIECE OF EQUIPMENT — S103

CALCULATE CUMULATIVE TRANSPORT DISORDER RISK OF CURRENT PLAN IN TARGET TRAINSET — S104

CALCULATE MAINTENANCE COST OF CURRENT PLAN IN TARGET TRAINSET — S105

CALCULATE SINGLE-EQUIPMENT FAILURE PROBABILITY OF REPLACEMENT DETAILS PATTERN IN EACH PIECE OF EQUIPMENT — S106

CALCULATE CUMULATIVE TRANSPORT DISORDER RISK OF REPLACEMENT DETAILS PATTERN IN TARGET TRAINSET — S107

CALCULATE MAINTENANCE COST OF REPLACEMENT DETAILS PATTERN IN TARGET TRAINSET — S108

OUTPUT COSTS AND RISKS OF REPLACEMENT DETAILS PATTERN AND CURRENT PLAN — S109

END OF PROCESS

# FIG. 3

D1

| TRAINSET NUMBER | 01A | 301 |

| INSPECTION NUMBER | A110 | 302 |

| EQUIPMENT NAME (303) | EQUIPMENT NUMBER (304) | REPLACEMENT DETAILS (305) |
|---|---|---|
| A | 1 | ✓ |
| B | 2 | |
| C | 3 | ✓ |
| D | 4 | ✓ |
| E | 5 | |

OK    CANCEL

## FIG. 4

T1

| TRAINSET NUMBER | REGULAR INSPECTION PERFORMANCE DATE / INSPECTION NUMBER / INSPECTION COST | | | |
|---|---|---|---|---|
| | N-TH | (N+1)-TH | (N+2)-TH | (N+3)-TH |
| 01A | JAN. 10, 2022<br>A110<br>10,000 YEN | FEB. 20, 2022<br>A111<br>11,000 YEN | MAR. 30, 2022<br>A112<br>13,000 YEN | MAY 1, 2022<br>A113<br>12,000 YEN |
| 01B | JAN. 11, 2022<br>B110<br>11,000 YEN | FEB. 21, 2022<br>B111<br>12,000 YEN | MAR. 31, 2022<br>B112<br>11,000 YEN | MAY 2, 2022<br>B113<br>13,000 YEN |
| 01C | JAN. 12, 2022<br>C110<br>12,000 YEN | FEB. 22, 2022<br>C111<br>13,000 YEN | APR. 1, 2022<br>C112<br>11,000 YEN | MAY 3, 2022<br>C113<br>12,000 YEN |
| 01D | JAN. 13, 2022<br>D110<br>13,000 YEN | FEB. 23, 2022<br>D111<br>12,000 YEN | APR. 2, 2022<br>D112<br>13,000 YEN | MAY 3, 2022<br>D113<br>13,000 YEN |
| 01E | JAN. 14, 2022<br>E110<br>12,000 YEN | FEB. 24, 2022<br>E111<br>13,000 YEN | APR. 3, 2022<br>E112<br>12,000 YEN | MAY 4, 2022<br>E113<br>13,000 YEN |

401 402 403 404

EP 4 510 051 A1

# FIG. 5

EP 4 510 051 A1

| EQUIPMENT NAME | EQUIPMENT NUMBER | TRAINSET NUMBER | PREVIOUS REPLACEMENT PERFORMANCE DATE | EQUIPMENT UNIT PRICE | UNPLANNED PRESERVATION UNIT PRICE | RISK INFLUENCE DEGREE | FAILURE PROBABILITY FUNCTION INFORMATION |
|---|---|---|---|---|---|---|---|
| EQUIPMENT A | 1 | 01A | JAN. 10, 2021 | 300,000 YEN | 50,000 YEN | 20 | $f_1(t)$ |
| EQUIPMENT B | 2 | 01A | FEB. 10, 2021 | 50,000 YEN | 150,000 YEN | 30 | $g_2(t)$ |
| EQUIPMENT C | 3 | 01A | MAR. 10, 2021 | 150,000 YEN | 250,000 YEN | 10 | $f_3(t)$ |
| EQUIPMENT D | 4 | 01A | JAN. 10, 2021 | 250,000 YEN | 100,000 YEN | 15 | $w_4(t)$ |
| EQUIPMENT E | 5 | 01A | APR. 10, 2021 | 100,000 YEN | 200,000 YEN | 30 | $f_4(t)$ |

Columns: 501, 502, 503, 504, 505, 506, 507, 508 — T2

# FIG. 6

T3

| TRAINSET NUMBER | LINE | TRAVEL DISTANCE (KM) | NUMBER OF STOPS (TIMES) | EXPECTED NUMBER OF RIDERS (PEOPLE) |
|---|---|---|---|---|
| 01A | A | 100 | 30 | 1000 |
| 01B | A | 150 | 40 | 400 |
| 01C | B | 100 | 50 | 870 |
| 01D | C | 30 | 10 | 600 |
| 01E | A | 50 | 30 | 20 |

601    602    603    604

# FIG. 7

SINGLE-EQUIPMENT
FAILURE PROBABILITY

704

PERIOD OF CONTINUOUS EQUIPMENT USE

701

702

703

706

705

707

| PREVIOUS REPLACEMENT PERFORMANCE DATE | CURRENT DATE AND TIME | REGULAR INSPECTION (N-TH) | REGULAR INSPECTION ((N+1)-TH) | REGULAR INSPECTION ((N+2)-TH) | REGULAR INSPECTION ((N+3)-TH) | REGULAR INSPECTION ((N+4)-TH) | REGULAR INSPECTION ((N+5)-TH) | REGULAR INSPECTION ((N+6)-TH) |

TIME

REPLACEMENT PERFORMANCE

REPLACEMENT PERFORMANCE

**FIG. 8**

START OF PROCESS

↓

SET BEGINNING AND END OF PERIOD OF CONTINUOUS EQUIPMENT USE. — S201

↓

CALCULATE EQUIPMENT FAILURE RISK — S202

↓

END OF PERIOD OF CONTINUOUS EQUIPMENT USE FALLS BEYOND END OF ANALYSIS RANGE? — S203

— YES → SET END OF PERIOD OF CONTINUOUS EQUIPMENT USE TO IMMEDIATELY PRECEDING REGULAR INSPECTION DATE AND TIME. — S209

— NO ↓

EQUIPMENT FAILURE RISK EXCEEDS THRESHOLD? — S204

— NO → SET NEXT REGULAR INSPECTION DATE AND TIME AS END. — S205

— YES ↓

SET END OF PERIOD OF CONTINUOUS EQUIPMENT USE TO IMMEDIATELY PRECEDING REGULAR INSPECTION DATE AND TIME. — S206

↓

CALCULATE SINGLE-EQUIPMENT FAILURE PROBABILITY. — S207

↓

SET END AS BEGINNING. SET NEXT REGULAR INSPECTION DATE AND TIME AS END. — S208

S209 →

CALCULATE SINGLE-EQUIPMENT FAILURE PROBABILITY. — S210

↓

END OF PROCESS

EP 4 510 051 A1

## FIG. 9

EQUIPMENT
FAILURE RISK

903

907    905

901

REGULAR
INSPECTION    902
((S+1)-TH)

REPLACEMENT
PERFORMANCE

REGULAR
INSPECTION    908
((S+2)-TH)

REGULAR
INSPECTION    904
((S+3)-TH)

REGULAR
INSPECTION    906
((S+4)-TH)

TIME

# FIG. 10

| LINE | NUMBER OF PASSENGERS (PEOPLE/HOUR) | LINESIDE POPULATION (10K PEOPLE) | LINESIDE GDP (100M YEN) | AVERAGE ANNUAL HOURS WORKED (HOURS) | AVERAGE RECOVERY TIME (HOURS) |
|---|---|---|---|---|---|
| A | 1,000 | 10 | 100 | 1400 | 0.5 |
| B | 1,600 | 100 | 1,000 | 1450 | 0.6 |
| C | 2,000 | 40 | 300 | 1350 | 0.7 |
| D | 3,000 | 50 | 700 | 1300 | 0.8 |
| E | 2,500 | 60 | 900 | 1400 | 0.9 |

T4

1001 1002 1003 1004 1005 1006

# FIG. 11

START OF PROCESS

BEGINNING OF LOOP FOR ALL PIECES OF EQUIPMENT OF DESIGNATED TRAINSET — S301

SET INITIAL VALUE FOR CUMULATIVE NUMBER OF REPLACEMENTS TO 1. — S302

COUNT NUMBER OF TIMES THAT $Y_m(t)$ BECOMES 0 FROM t = 0 TO GIVEN t AND CALCULATE CUMULATIVE NUMBER OF REPLACEMENTS — S303

CALCULATE CUMULATIVE REPLACEMENT COST FROM PRODUCT OF CUMULATIVE NUMBER OF REPLACEMENTS AND UNIT PRICE OF TARGET EQUIPMENT — S304

END OF LOOP FOR ALL PIECES OF EQUIPMENT OF DESIGNATED TRAINSET — S305

OUTPUT TOTAL SUM OF CUMULATIVE REPLACEMENT COSTS OF RESPECTIVE PIECES OF EQUIPMENT AS REPLACEMENT COST — S306

END OF PROCESS

**FIG. 12**

```
                        ┌─────────────────────┐
                        │   START OF PROCESS  │
                        └──────────┬──────────┘
                                   │
        ┌──────────────────────────────────────────────┐  S401
        │  SET BEGINNING AND END OF PERIOD OF          │
        │  CONTINUOUS EQUIPMENT USE.                   │
        └──────────────────────────────────────────────┘
                                   │
        ┌──────────────────────────────────────────────┐  S402
        │  CALCULATE EQUIPMENT FAILURE RISK            │
        └──────────────────────────────────────────────┘
                                   │
                               S403
         ╱─────────────────────────────────────╲      YES
        ╱   END OF PERIOD OF CONTINUOUS          ╲──────────►
        ╲   EQUIPMENT USE FALLS BEYOND           ╱
         ╲  END OF ANALYSIS RANGE?              ╱
          ╲───────────────────────────────────╱
                        │ NO
                     S404
         ╱─────────────────────────────────────╲
        ╱  CONDITION THAT REGULAR INSPECTION     ╲  YES
        ╲  IMMEDIATELY PRECEDING END BE DIRECTED ╱──►
        ╱  TO ANALYSIS OBJECT AND CONDITION THAT ╲
        ╲  TARGET EQUIPMENT BE TO BE REPLACED    ╱
         ╲ ARE MET?                             ╱
          ╲───────────────────────────────────╱
                        │ NO
                     S405
    ┌──────────┐  NO  ╱──────────────────────╲
    │ SET END  │◄─────╱ EQUIPMENT FAILURE RISK ╲
    │ TO NEXT  │      ╲ EXCEEDS THRESHOLD?     ╱
    │ REGULAR  │       ╲──────────────────────╱
    │INSPECTION│              │ YES
    │DATE AND  │   S406
    │ TIME.    │
    └──────────┘
```

S406 SET END TO NEXT REGULAR INSPECTION DATE AND TIME.

S407 SET END OF PERIOD OF CONTINUOUS EQUIPMENT USE TO IMMEDIATELY PRECEDING REGULAR INSPECTION DATE AND TIME.

S408 CALCULATE SINGLE-EQUIPMENT FAILURE PROBABILITY.

S409 SET END AS BEGINNING. SET NEXT REGULAR INSPECTION DATE AND TIME AS END.

S410 SET END OF PERIOD OF CONTINUOUS EQUIPMENT USE TO IMMEDIATELY PRECEDING REGULAR INSPECTION DATE AND TIME.

S411 CALCULATE SINGLE-EQUIPMENT FAILURE PROBABILITY.

END OF PROCESS

EP 4 510 051 A1

# FIG. 13

T5

|  | CURRENT PLAN<br>1301 | REPLACEMENT PATTERN<br>1302 |
|---|---|---|
| TRANSPORT DISORDER RISK<br>1303 | $r_1(t)$<br>t: GIVEN DATE AND TIME | $r_2(t)$<br>t: GIVEN DATE AND TIME |
| CUMULATIVE TRANSPORT DISORDER RISK<br>1304 | $R_1(t)$<br>t: GIVEN DATE AND TIME | $R_2(t)$<br>t: GIVEN DATE AND TIME |
| MAINTENANCE COST<br>1305 | $C_1(t)$<br>t: GIVEN DATE AND TIME | $C_2(t)$<br>t: GIVEN DATE AND TIME |

# FIG. 14

TRANSPORT DISORDER RISK

1404

1401

1402

1403

TIME

REGULAR INSPECTION (N-TH)

REGULAR INSPECTION ((N+1)-TH)

REGULAR INSPECTION ((N+2)-TH)

REGULAR INSPECTION ((N+3)-TH)

n YEARS LATER

FIG. 15

CUMULATIVE TRANSPORT
DISORDER RISK

1504

1501

1502

1503

TIME

REGULAR
INSPECTION
(N-TH)

REGULAR
INSPECTION
((N+1)-TH)

REGULAR
INSPECTION
((N+2)-TH)

REGULAR
INSPECTION
((N+3)-TH)

n YEARS
LATER

# FIG. 16

MAINTENANCE
COST

1605

1604

1603

1601

1602

REGULAR INSPECTION (N-TH) | REGULAR INSPECTION ((N+1)-TH) | ONE YEAR LATER | REGULAR INSPECTION ((N+2)-TH) | REGULAR INSPECTION ((N+3)-TH) | TWO YEARS LATER

TIME

EP 4 510 051 A1

## FIG. 17

EQUIPMENT PRESERVATION DECISION SUPPORT SYSTEM

1

TARGET TRAINSET AND TARGET REGULAR INSPECTION

MAINTENANCE MANAGER

RETRIEVED REPLACEMENT DETAILS

1701 INPUT EXECUTION UNIT

OUTPUT UNIT 117

116 PROCESSING UNIT

N

118 COMMUNICATION UNIT

119 VEHICLE MANAGEMENT APPARATUS

120 SCHEDULE MANAGEMENT APPARATUS

MAIN STORAGE APPARATUS

LOAD DISTRIBUTION ESTIMATION UNIT 102

FAILURE PROBABILITY ESTIMATION UNIT 103

RISK AND COST CALCULATION UNIT 104

FAILURE PROBABILITY SIMULATION UNIT 105

REPLACEMENT DETAILS PATTERN CALCULATION UNIT 1702

REPLACEMENT DETAILS PATTERN SEARCH UNIT 1703

RESULT OUTPUT UNIT 106

AUXILIARY STORAGE APPARATUS

TIMETABLE INFORMATION 107

EQUIPMENT-RELATED INFORMATION 108

INSPECTION PLAN INFORMATION 109

LINESIDE INFORMATION 110

RISK AND COST OUTPUT INFORMATION 111

REPLACEMENT PROPOSAL COMPARISON INFORMATION 1704

REPLACEMENT PROPOSAL SEARCH INFORMATION 1705

EP 4 510 051 A1

38

# FIG. 18

START OF PROCESS

ENTER TRAINSET NUMBER AND REGULAR INSPECTION NUMBER DESIRED TO BE SEARCHED FOR — S501

CALCULATE LOAD DISTRIBUTION FUNCTION FOR EACH LOAD ITEM OF EACH TRAINSET — S502

CALCULATE SINGLE-EQUIPMENT FAILURE PROBABILITY OF CURRENT PLAN IN EACH PIECE OF EQUIPMENT — S503

CALCULATE CUMULATIVE TRANSPORT DISORDER RISK OF CURRENT PLAN IN TARGET TRAINSET — S504

CALCULATE MAINTENANCE COST OF CURRENT PLAN IN TARGET TRAINSET — S505

IDENTIFY REPLACEMENT DETAILS PATTERN CANDIDATES — S506

CALCULATE SINGLE-EQUIPMENT FAILURE PROBABILITY OF EACH REPLACEMENT DETAILS PATTERN CANDIDATE IN EACH PIECE OF EQUIPMENT — S507

CALCULATE CUMULATIVE TRANSPORT DISORDER RISK OF EACH REPLACEMENT DETAILS PATTERN CANDIDATE IN TARGET TRAINSET — S508

CALCULATE MAINTENANCE COST OF EACH REPLACEMENT DETAILS PATTERN CANDIDATE IN TARGET TRAINSET — S509

SEARCH FOR REPLACEMENT DETAILS PATTERN MEETING SEARCH CONDITION — S510

OUTPUT COSTS AND RISKS OF RETRIEVED REPLACEMENT DETAILS AND CURRENT PLAN — S511

END OF PROCESS

FIG. 19

T6

| | REPLACEMENT PATTERN 1 | REPLACEMENT PATTERN 2 | REPLACEMENT PATTERN 3 |
|---|---|---|---|
| TRANSPORT DISORDER RISK | $r_1(t)$<br><br>t: GIVEN DATE AND TIME | $r_2(t)$<br><br>t: GIVEN DATE AND TIME | $r_3(t)$<br><br>t: GIVEN DATE AND TIME |
| CUMULATIVE TRANSPORT DISORDER RISK | $R_1(t)$<br><br>t: GIVEN DATE AND TIME | $R_2(t)$<br><br>t: GIVEN DATE AND TIME | $R_3(t)$<br><br>t: GIVEN DATE AND TIME |
| MAINTENANCE COST | $C_1(t)$<br><br>t: GIVEN DATE AND TIME | $C_2(t)$<br><br>t: GIVEN DATE AND TIME | $C_3(t)$<br><br>t: GIVEN DATE AND TIME |

1901

1902

1903

1904

# FIG. 20

T7

|  | REPLACEMENT PATTERN 1 | REPLACEMENT PATTERN 2 | REPLACEMENT PATTERN 3 |
|---|---|---|---|
| MAXIMUM VALUE OF TRANSPORT DISORDER RISK | 10 YEN | 5 YEN | 20 YEN |
| CUMULATIVE TRANSPORT DISORDER RISK | 100 YEN | 50 YEN | 200 YEN |
| MAINTENANCE COST | 200 YEN | 300 YEN | 180 YEN |
| SUM OF CUMULATIVE TRANSPORT DISORDER RISK AND MAINTENANCE COST | 300 YEN | 350 YEN | 380 YEN |

2001　　2002　　2005

2003　2004　2006　2007

## FIG. 21

**EQUIPMENT PRESERVATION DECISION SUPPORT SYSTEM** — 1

MAINTENANCE MANAGER

REPLACEMENT DETAILS → INPUT UNIT — 101

OUTPUT UNIT — 117 ← PROCESSING RESULT

116 — PROCESSING UNIT

N

118 — COMMUNICATION UNIT

119 — VEHICLE MANAGEMENT APPARATUS

120 — SCHEDULE MANAGEMENT APPARATUS

### MAIN STORAGE APPARATUS

- GROUND EQUIPMENT LOAD DISTRIBUTION ESTIMATION UNIT — 2102
- GROUND EQUIPMENT FAILURE PROBABILITY ESTIMATION UNIT — 2103
- RISK AND COST CALCULATION UNIT — 104
- GROUND EQUIPMENT FAILURE PROBABILITY SIMULATION UNIT — 2104
- RESULT OUTPUT UNIT — 106

### AUXILIARY STORAGE APPARATUS

- TIMETABLE INFORMATION — 2101
- EQUIPMENT-RELATED INFORMATION — 108
- INSPECTION PLAN INFORMATION — 109
- LINESIDE INFORMATION — 110
- RISK AND COST OUTPUT INFORMATION — 111

EP 4 510 051 A1

# FIG. 22

T8

| GROUND EQUIPMENT NUMBER 2201 | SECTION 2202 | INSTALLATION POSITION 2203 | NUMBER OF PASSAGES (TIMES) 2204 | NUMBER OF PASSERS (PEOPLE) 2205 | PASSAGE SPEED 2206 |
|---|---|---|---|---|---|
| 1 | A | a | 100 | 30 | 1000 |
| 2 | A | a | 100 | 30 | 1000 |
| 3 | A | b | 100 | 50 | 870 |
| 4 | A | c | 30 | 10 | 600 |
| 5 | A | C | 30 | 10 | 600 |

# FIG. 23

START OF PROCESS

ENTER REPLACEMENT DETAILS — S601

CALCULATE LOAD DISTRIBUTION FUNCTION FOR EACH LOAD ITEM OF EACH PIECE OF GROUND EQUIPMENT — S602

CALCULATE SINGLE-EQUIPMENT FAILURE PROBABILITY OF CURRENT PLAN IN EACH PIECE OF GROUND EQUIPMENT — S603

CALCULATE CUMULATIVE TRANSPORT DISORDER RISK OF CURRENT PLAN IN TARGET SECTION — S604

CALCULATE MAINTENANCE COST OF CURRENT PLAN IN TARGET SECTION — S605

CALCULATE SINGLE-EQUIPMENT FAILURE PROBABILITY OF REPLACEMENT DETAILS PATTERN IN EACH PIECE OF GROUND EQUIPMENT — S606

CALCULATE CUMULATIVE TRANSPORT DISORDER RISK OF REPLACEMENT DETAILS PATTERN IN TARGET SECTION — S607

CALCULATE MAINTENANCE COST OF REPLACEMENT DETAILS PATTERN IN TARGET SECTION — S608

OUTPUT COSTS AND RISKS OF REPLACEMENT DETAILS PATTERN AND CURRENT PLAN — S609

END OF PROCESS

## FIG. 24

## INTERNATIONAL SEARCH REPORT

| International application No. |
| --- |
| **PCT/JP2022/035746** |

| A. | CLASSIFICATION OF SUBJECT MATTER |
| --- | --- |

*G06Q 10/00*(2023.01)i
FI:   G06Q10/00 300

According to International Patent Classification (IPC) or to both national classification and IPC

| B. | FIELDS SEARCHED |
| --- | --- |

Minimum documentation searched (classification system followed by classification symbols)

G06Q10/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2009-251822 A (TOSHIBA CORP.) 29 October 2009 (2009-10-29) | 1-4, 6, 9, 14-21 |
|   | paragraphs [0001]-[0002], [0039]-[0040], [0068]-[0070], fig. 2, 3 | |
| Y | paragraphs [0001]-[0002], [0039]-[0040], [0068]-[0070], fig. 2, 3 | 10-13 |
| A | entire text, all drawings | 5, 7-8 |
| Y | JP 2016-203931 A (HITACHI, LTD.) 08 December 2016 (2016-12-08) | 10-11 |
|   | paragraph [0024] | |
| A | entire text, all drawings | 1-9, 12-21 |
| Y | JP 2005-157793 A (HITACHI EAST JAPAN SOLUTIONS, LTD.) 16 June 2005 (2005-06-16) | 11 |
|   | paragraph [0037], fig. 11 | |
| A | entire text, all drawings | 1-10, 12-21 |
| Y | JP 2016-224539 A (NIPPON TELEGR. & TELEPH. CORP.) 28 December 2016 (2016-12-28) | 12-13 |
|   | claim 1 | |
| A | entire text, all drawings | 1-11, 14-21 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 November 2022** | **13 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/035746**

| Patent document cited in search report | | | Publication date (day/month/year) | Patent family member(s) | Publication date (day/month/year) |
|---|---|---|---|---|---|
| JP | 2009-251822 | A | 29 October 2009 | (Family: none) | |
| JP | 2016-203931 | A | 08 December 2016 | EP 3089082 A1 paragraph [0025] US 2016/0318534 A1 | |
| JP | 2005-157793 | A | 16 June 2005 | (Family: none) | |
| JP | 2016-224539 | A | 28 December 2016 | (Family: none) | |

Form PCT/ISA/210 (patent family annex) (January 2015)

## EP 4 510 051 A1

**Patent documents cited in the description**

- JP 2019133412 A